(19) Europäisches Patentamt
European Patent Office
Office européen des brevets

(11) EP 4 098 670 B1

(12) **EUROPEAN PATENT SPECIFICATION**

(45) Date of publication and mention of the grant of the patent:
**13.05.2026 Bulletin 2026/20**

(21) Application number: **22186445.7**

(22) Date of filing: **28.04.2020**

(51) International Patent Classification (IPC):
***C08F 210/16*** *(2006.01)* ***C08F 4/659*** *(2006.01)*
***C08F 4/6592*** *(2006.01)* ***C08F 4/64*** *(2006.01)*

(52) Cooperative Patent Classification (CPC):
(C-Sets available)
**C08F 210/16;** C08F 4/65912; C08F 4/65916
(Cont.)

# (54) BIMODAL POLY(ETHYLENE-CO-1-ALKENE) COPOLYMER

BIMODALES POLY(ETHYLEN-CO-1-ALKEN)-COPOLYMER

COPOLYMÈRE DE POLY(ÉTHYLÈNE-CO-1-ALCÈNE) BIMODAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:
**30.04.2019 US 201962840835 P**
**30.04.2019 US 201962840865 P**
**31.07.2019 US 201962880835 P**
**17.03.2020 US 202062990549 P**

(43) Date of publication of application:
**07.12.2022 Bulletin 2022/49**

(62) Document number(s) of the earlier application(s) in accordance with Art. 76 EPC:
**20725062.2 / 3 962 969**

(73) Proprietor: **Dow Global Technologies LLC**
**Midland, MI 48674 (US)**

(72) Inventors:
- **ASKAR, Shadid**
  **Texas (US)**
- **MARTIN, Peter S.**
  **Texas (US)**
- **LIU, Bo**
  **Texas (US)**
- **SZUL, John F.**
  **West Virginia (US)**
- **KUHLMAN, Roger L**
  **Texas (US)**
- **KAPUR, Mridula Babli**
  **Texas (US)**

(74) Representative: **Boult Wade Tennant LLP**
**Salisbury Square House**
**8 Salisbury Square**
**London EC4Y 8AP (GB)**

(56) References cited:
**WO-A1-2006/138084** **WO-A1-2009/085922**
**WO-A1-2017/044373** **WO-A1-2018/147968**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 210/16, C08F 4/64148, C08F 4/65925;**
**C08F 210/16, C08F 4/65904;**
C08F 210/16, C08F 210/14, C08F 2500/04, C08F 2500/05, C08F 2500/07, C08F 2500/11, C08F 2500/12, C08F 2500/13, C08F 2500/14

## Description

### FIELD

Bimodal poly(ethylene-*co*-1-alkene) copolymer and related methods and articles.

### INTRODUCTION

Patent application publications and patents in or about the field include US7868092B2, US9169337B2, WO2008147968, and USSN 62/712,527 filed July 31, 2018.

### SUMMARY

WO-A-2018/147968 relates to an ethylene-based polymer comprising a higher molecular weight component (HMW component) and a lower molecular weight component (LMW component), the ethylene- based polymer being characterized by a density greater than or equal to 0.949 g/cm$^3$, measured according to ASTM D792, a ratio of Mw/Mn of from 25 to 35, an ESCR of at least 600 hr. measured according to ASTM D-1693, Condition B (Igepal 10%), and a bimodal weight average molecular weight distribution with a local minimum in a range of log (molecular weight) 4 to 6 between a peak representing the HMW component and a peak representing the LMW component, as determined by Gel Permeation Chromatography (GPC) analysis, of the ethylene-based polymer.

WO-A-2017/044373 relates to ethylene-based polymers generally characterized by a density greater than 0.954 g/cm$^3$, high load melt index ranging from 10 to 45 g/10 min, a ratio of high load melt index to melt index ranging from 175 to 600, a rheological slope parameter ranging from 0.15 to 0.30, and an ESCR in 10% igepal exceeding 800 hours.

We discovered a bimodal poly(ethylene-*co*-1-alkene) copolymer. The copolymer comprises a higher molecular weight poly(ethylene-*co*-1-alkene) copolymer component (HMW copolymer component) and a lower molecular weight poly(ethylene-*co*-1-alkene) copolymer component (LMW copolymer component). The copolymer is characterized by a unique combination of features comprising, or indicated by, its density; molecular weight distributions; component weight fraction amount; and viscoelastic properties; and at least one of environmental stress-cracking resistance and resin swell. Additional inventive embodiments include a method of making the copolymer, a formulation comprising the copolymer and at least one additive that is different than the copolymer, a method of making a manufactured article from the copolymer or formulation; the manufactured article made thereby, and use of the manufactured article.

### DETAILED DESCRIPTION

The bimodal poly(ethylene-*co*-1-alkene) copolymer is a composition of matter. The bimodal poly(ethylene-*co*-1-alkene) copolymer comprises the higher molecular weight poly(ethylene-*co*-1-alkene) copolymer component (HMW copolymer component) and the lower molecular weight poly(ethylene-*co*-1-alkene) copolymer component (LMW copolymer component). The copolymer is characterized by the unique combination of features comprising, or indicated by, its density; molecular weight distributions; component weight fraction amount; and viscoelastic properties; and at least one, alternatively each of environmental stress-cracking resistance and resin swell. Embodiments of the copolymer may be characterized by refined or additional features and/or by features of one or both of its HMW and LMW copolymer components. The copolymer is a so-called reactor copolymer because it is made in a single polymerization reactor using a bimodal catalyst system effective for simultaneously making the HMW and LMW copolymer components *in situ.* The same copolymer composition cannot be made by separately making the HMW copolymer component and separately making the LMW copolymer component, and then blending the separately made components together.

The bimodal poly(ethylene-*co*-1-alkene) copolymer is a so-called reactor copolymer because it is made in a single polymerization reactor using a bimodal catalyst system effective for simultaneously making the HMW and LMW copolymer components *in situ.* The bimodal catalyst system comprises a so-called high molecular weight-polymerization catalyst effective for making mainly of the HMW copolymer component and a low molecular weight-polymerization catalyst effective for making mainly the LMW copolymer component. The high molecular weight-polymerization catalyst and the low molecular weight-polymerization catalyst operate under identical reactor conditions in a single polymerization reactor. It is believed that the intimate nature of the blend of the LMW and HMW copolymer components achieved in the bimodal poly(ethylene-*co*-1-alkene) copolymer by this *in situ* single reactor polymerization method could not be achieved by separately making the HMW copolymer component in the absence of the LMW copolymer component and separately making the LMW copolymer component in the absence of the HMW copolymer component, and then blending the separately made neat copolymer components together in a post-reactor process.

The bimodal poly(ethylene-*co*-1-alkene) copolymer has improved processability. This enables manufacturing methods wherein the copolymer is melt-extruded and formed into manufactured articles. The manufactured articles

include molded articles. Molded articles may be made by processes such as injection molding, rotary molding, or blow molding and may be so-called small-part blow-molded (SPBM) articles. Examples of the manufactured articles are bottles (e.g., small part extrusion blow molded bottles) and toy parts.

The bimodal poly(ethylene-*co*-1-alkene) copolymer has increased resistance to environmental stress cracking. As the number of carbon atoms of the alpha-olefin increases (e.g., from 1-butene to 1-hexene to 1-octene, and so on), it is expected that resistance to environmental stress cracking of the copolymer embodiments would increase.

The characteristic features and resulting improved processability and performance of the bimodal poly(ethylene-*co*-1-alkene) copolymer are imparted by the bimodal catalyst system used to make the copolymer.

The invention is defined in the appended claims. Additional inventive aspects follow; some are numbered below for ease of reference.

Aspect 1 (not encompassed by the wording of the claims). A bimodal poly(ethylene-*co*-1-alkene) copolymer comprising a higher molecular weight poly(ethylene-*co*-1-alkene) copolymer component (HMW copolymer component) and a lower molecular weight poly(ethylene-*co*-1-alkene) copolymer component (LMW copolymer component), the copolymer being characterized by a combination of features comprising each of features (a) to (e) and features (f1) and (g): (a) a density greater than 0.955 gram per cubic centimeter (g/cm$^3$) measured according to ASTM D792-13 (Method B, 2-propanol); (b) a first molecular weight distribution that is a ratio of $M_w/M_n$ from 13 to 25, wherein $M_w$ is weight-average molecular weight and $M_n$ is number-average molecular weight, both measured by Gel Permeation Chromatography (GPC); (c) a second molecular weight distribution that is a ratio of $M_z/M_w$ greater than 8, wherein $M_z$ is z-average molecular weight and $M_w$ is weight-average molecular weight, both measured by GPC; (d) a component weight fraction amount wherein the HMW copolymer component is less than 28 weight percent (wt%), alternatively less than 25 wt% of the combined weight of the HMW and LMW copolymer components; and (e) a high load melt index (HLMI or $I_{21}$) from 20 to 45 grams per 10 minutes (g/10 min.), alternatively from 25 to 40 g/10 min., measured according to ASTM D1238-13 (190° C., 21.6 kg); and (f1) an environmental stress-cracking resistance (ESCR) (10% Igepal, F50) of greater than or equal to 150 hours, alternatively at least 160 hours, alternatively at least 170 hours, measured according to ASTM D1693-15, Method B; and (g) a resin swell t1000 of greater than 7.7 seconds, alternatively a resin swell t1000 greater than or equal to 8.0 seconds, measured according to the Resin Swell t1000 Test Method. In some aspects the bimodal poly(ethylene-*co*-1-alkene) copolymer of aspect 1 comprises features (a) to (f1), alternatively features (a) to (e) and (g), alternatively (a) to (e), (f1), and (g).

Aspect 2. A bimodal poly(ethylene-*co*-1-alkene) copolymer comprising a higher molecular weight poly(ethylene-*co*-1-alkene) copolymer component (HMW copolymer component) and a lower molecular weight poly(ethylene-*co*-1-alkene) copolymer component (LMW copolymer component), the copolymer being characterized by a combination of features comprising each of features (a) to (e) and feature (f2) and, optionally, feature (g): (a) a density greater than (>) 0.955 gram per cubic centimeter (g/cm$^3$) measured according to ASTM D792-13 (Method B, 2-propanol); (b) a first molecular weight distribution that is a ratio of $M_w/M_n$ from 16 to 18, wherein $M_w$ is weight-average molecular weight and $M_n$ is number-average molecular weight, both measured by Gel Permeation Chromatography (GPC); (c) a second molecular weight distribution that is a ratio of $M_z/M_w$ from 11 to 15, wherein $M_z$ is z-average molecular weight and $M_w$ is weight-average molecular weight, both measured by GPC; (d) a component weight fraction amount wherein the HMW copolymer component is less than (<) 28 weight percent (wt%) of the combined weight of the HMW and LMW copolymer components (and thus the LMW copolymer component amount is > 72 wt%), alternatively the HMW copolymer component is less than 25 wt% (and thus the LMW copolymer component is > 75 wt%); and (e) a high load melt index (HLMI or $I_{21}$) from 20 to 45 grams per 10 minutes (g/10 min.), measured according to ASTM D1238-13 (190° C., 21.6 kg); and (f2) an environmental stress-cracking resistance in hours as a function of melt flow ratio, wherein the function is defined by Equation 1: ESCR (10% Igepal, F50) > (10 * MFR5 * 1 hour) - 150 hours (Eq. 1), wherein > means greater than; * means multiplication; ESCR (10% Igepal, F50) is the number of hours to failure measured according to ASTM D1693-15, Method B; and MFR5 is a ratio of the (e) HLMI divided by a melt index $I_5$ expressed in g/10 min. measured according to ASTM D1238-13 (190° C., 5.0 kg); and, optionally, (g) a resin swell t1000 of greater than 7.7 seconds, alternatively a resin swell t1000 greater than or equal to 8.0 seconds, measured according to the Resin Swell t1000 Test Method. The "° C." means degrees Celsius. In some aspects the bimodal poly(ethylene-*co*-1-alkene) copolymer of aspect 2 comprises features (a) to (f2), alternatively (a) to (e), (f2), and (g).

Aspect 3. The bimodal poly(ethylene-*co*-1-alkene) copolymer of aspect 1 or 2 further characterized by any one of refined features (a) to (e), (f1) or (f2), respectively, and (g): (a) the density is from 0.956 to 0.962 g/cm$^3$, alternatively from 0.957 to 0.959 g/cm$^3$, alternatively from 0.957 to 0.961 g/cm$^3$ , alternatively from 0.958 to 0.960 g/cm$^3$; (b) the $M_w/M_n$ is from 16 to 18; (c) the $M_z/M_w$ is from 11 to 15, alternatively from 11 to 13; (d) the HMW copolymer component weight fraction amount is from 17 to 27 wt%, alternatively from 19 to 24.9 wt%, alternatively from 21 to 24 wt%; (e) the HLMI is from 25 to 41, alternatively from 26 to 39, alternatively from 27 to 38; (f1) an ESCR (10% Igepal, F50) of from 150 to 500 hours, alternatively from 150 to 400 hours, alternatively from 150 to 300 hours, alternatively from 150 to 250 hours, alternatively from 171 to 240 hours or (f2) the ESCR (10% Igepal, F50) is a function of the MFR5 as defined by Equation 1a: ESCR (10% Igepal, F50) > (10 * MFR5 * 1 hour) - 100 hours (Eq. 1a), alternatively as defined by Equation 1b: ESCR (10% Igepal, F50) >

(10 * MFR5 * 1 hour) - 75 hours (Eq. 1b); and (g) the resin swell t1000 is from 7.7 to 8.5 seconds (s), alternatively from 8.0 to 9.0 seconds, alternatively from 8.0 to 8.5 seconds.

Aspect 4. The bimodal poly(ethylene-*co*-1-alkene) copolymer of any one of aspects 1 to 3 further characterized by any one of features (h) to (q): (h) $M_w$ from 280,000 to 360,000 grams per mole (g/mol), alternatively from 310,000 to 330,000 g/mol; (i) $M_n$ from 15,000 to 23,000 grams g/mol, alternatively from 18,000 to 20,000 g/mol; (j) $M_z$ from 3,000,000 to 4,800,000 g/mol, alternatively from 3,600,000 to 4,000,000 g/mol; (k) an MFR5 from 16 to 27, alternatively from 22 to 26.4; (l) an MFR2 from 150 to 210, alternatively from 160 to 199; (m) a melt index $I_5$ from 0.5 to 2.0 g/10 minutes, alternatively from 0.8 to 1.9 g/10 min., alternatively from > 1.0 to 1.7 g/10 min.; (n) a melt index $I_2$ from 0.1 to 0.3 g/10 min. g/10 min.; (o) feature (g) in combination with feature (f1) or (f2), respectively; (p) a combination of any seven of features (h) to (o); and (q) a combination of each of features (h) to (o).

Aspect 5. The bimodal poly(ethylene-*co*-1-alkene) copolymer of any one of aspects 1 to 4 further characterized by any one of features (r) to (w): (r) the LMW copolymer component has a $M_w$ from 45,000 to 55,000 g/mol, alternatively from 49,000 to 51,000 g/mol; (s) the LMW copolymer component has a $M_n$ from 13,000 to 20,000 g/mol, alternatively from 15,000 to 20,000 g/mol, alternatively from 17,000 to 19,000 g/mol; (t) the LMW copolymer component has a $M_z$ from 85,000 to 115,000 g/mol, alternatively from 95,000 to 110,000 g/mol, alternatively from 98,000 to 106,000 g/mol; (u) the LMW copolymer component has a $M_w/M_n$ ratio from 2.5 to 3.3, alternatively from 2.5 to 3.0, alternatively from 2.6 to 2.9; (v) any three of features (r) to (u); (w) each of features (r) to (u).

Aspect 6. The bimodal poly(ethylene-*co*-1-alkene) copolymer of any one of aspects 1 to 5 further characterized by any one of features (x) to (ac): (x) the HMW copolymer component has a $M_w$ from 1,000,000 to 1,400,000 g/mol, alternatively from 1,090,000 to 1,300,000 g/mol; (y) the HMW copolymer component has a $M_n$ from 240,000 to 320,000 g/mol, alternatively from 250,000 to 280,000 g/mol; (z) the HMW copolymer component has a $M_z$ from 2,000,000 to 4,700,000 g/mol, alternatively from 2,200,000 to 3,600,000 g/mol; (aa) the HMW copolymer component has a $M_w/M_n$ ratio from 4.0 to 4.4, alternatively from 4.1 to 4.3; (ab) any three of features (x) to (aa); and (ac) each of features (x) to (aa).

Aspect 7. The bimodal poly(ethylene-*co*-1-alkene) copolymer of any one of aspects 1 to 6 further characterized by feature (ad): a melt strength of greater than 7.0 centinewtons (cN), alternatively from 7.5 to 9.0 cN.

Aspect 8. The bimodal poly(ethylene-*co*-1-alkene) copolymer of any one of aspects 1 to 7 wherein the 1-alkene is 1-hexene and the bimodal poly(ethylene-*co*-1-alkene) copolymer is bimodal poly(ethylene-*co*-1-hexene) copolymer.

Aspect 9. A method of making the bimodal poly(ethylene-*co*-1-alkene) copolymer of any one of aspects 1 to 8, the method comprising contacting ethylene and at least one 1-alkene with a bimodal catalyst system in a single gas phase polymerization (GPP) reactor under effective polymerization conditions to give the bimodal poly(ethylene-*co*-1-alkene) copolymer; wherein the bimodal catalyst system consists essentially of a metallocene catalyst, a single-site non-metallocene catalyst that is an bis((alkyl-substituted phenylamido)ethyl)amine catalyst, optionally a host material, and optionally an activator (excess amount thereof); wherein the host material, when present, is selected from at least one of an inert hydrocarbon liquid (inert means free of carbon-carbon double or triple bonds) and a solid support (e.g., an untreated silica or hydrophobic agent-surface treated fumed silica); wherein the metallocene catalyst is an activation reaction product of contacting an activator with a metal-ligand complex of formula $(R_{1-2}Cp)((alkyl)_{1-3}Indenyl)MX_2$, wherein R is hydrogen, methyl, or ethyl; each alkyl independently is a $(C_1$-$C_4)$alkyl; M is titanium, zirconium, or hafnium; and each X is independently a halide, a ($C_1$ to $C_{20}$)alkyl, a ($C_7$ to $C_{20}$)aralkyl, a ($C_1$ to $C_6$)alkyl-substituted ($C_6$ to $C_{12}$)aryl, or a ($C_1$ to $C_6$) alkyl-substituted benzyl; and wherein the bis((alkyl-substituted phenylamido)ethyl)amine catalyst is an activation reaction product of contacting an activator with a bis((alkyl-substituted phenylamido)ethyl)amine $ZrR^1_2$, wherein each $R^1$ is independently selected from F, Cl, Br, I, benzyl, $-CH_2Si(CH_3)_3$, a ($C_1$-$C_5$)alkyl, and a ($C_2$-$C_5$)alkenyl. In some aspects the metal-ligand complex of formula (I) is a compound wherein M is zirconium (Zr); R is H, alternatively methyl, alternatively ethyl; and each X is Cl, methyl, or benzyl; and the bis((alkyl-substituted phenylamido)ethyl)amine $MR^1_2$ is a bis(2-(pentamethylphenylamido)ethyl)-amine zirconium complex of formula (II):

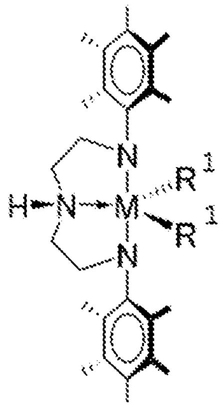

(II)

,

wherein M is Zr and each $R^1$ independently is Cl, Br, a ($C_1$ to $C_{20}$)alkyl, a ($C_1$ to $C_6$)alkyl-substituted ($C_6$-$C_{12}$)aryl, benzyl, or a ($C_1$ to $C_6$)alkyl-substituted benzyl. In some aspects the compound of formula (II) is bis(2-(pentamethylphenylamido) ethyl)-amine zirconium dibenzyl. In some aspects each X and $R^1$ is independently Cl, methyl, 2,2-dimethylpropyl, $-CH_2Si(CH_3)_3$, or benzyl.

Aspect 10. The method of aspect 9 wherein the metal-ligand complex is of formula (I):

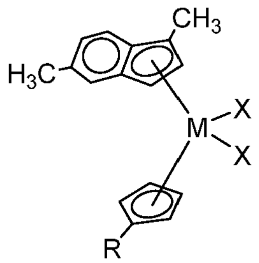

(I)

,

wherein R, M, and X are as defined in aspect 8.

Aspect 11. A formulation comprising the bimodal poly(ethylene-*co*-1-alkene) copolymer of any one of aspects 1 to 8 and at least one additive that is different than the copolymer. The at least one additive may be one or more of a polyethylene homopolymer; a unimodal ethylene/alpha-olefin copolymer; a bimodal ethylene/alpha-olefin copolymer that is not the inventive copolymer; a polypropylene polymer; an antioxidant (e.g., Antioxidant 1 and/or 2 described later); a catalyst neutralizer (i.e., metal deactivator, e.g., Catalyst Neutralizer 1 described later); an inorganic filler (e.g., hydrophobic fumed silica, which is made by surface treating a hydrophilic fumed silica with a hydrophobic agent such as dimethyldichlorosilane); a colorant (e.g., carbon black or titanium dioxide); a stabilizer for stabilizing the formulation against effects of ultraviolet light (UV stabilizer), such as a hindered amine stabilizer (HAS); a processing aid; a nucleator for promoting polymer crystallization (e.g., calcium (1R,2S)-*cis*-cyclohexane-1,2-dicarboxylate (1:1); calcium stearate (1:2), or zinc stearate); a slip agent (e.g., erucamide, stearamide, or behenamide); and a flame retardant. The formulation may be made by melt-blending together the bimodal poly(ethylene-*co*-1-alkene) copolymer of any one of aspects 1 to 8 and the at least one additive.

Aspect 12. A method of making a manufactured article, the method comprising extruding-melt-blowing the bimodal poly(ethylene-*co*-1-alkene) copolymer of any one of aspects 1 to 8, or the formulation of aspect 11, under effective conditions so as to make the manufactured article.

Aspect 13. The manufactured article made by the method of aspect 12. The manufactured article may be part of a large-part blow molded article such as a container drum, fuel tank, water tank, or pipe (e.g., hot water pipe). Alternatively, the manufactured article may be a small-part manufactured article such as a chemical bottle, milk bottle, or a toy.

Aspect 14. Use of the manufactured article of aspect 13 in storing or transporting a material in need of storing or transporting. Examples of such materials are household and industrial chemicals, detergents, personal care products, medical products, food, beverages, water, gasoline, diesel fuel, aviation fuel, plastic pellets, and chemicals such as acids and bases.

The single gas phase polymerization reactor may be a fluidized-bed gas phase polymerization (FB-GPP) reactor and the effective polymerization conditions may comprise conditions (a) to (e): (a) the FB-GPP reactor having a fluidized resin bed at a bed temperature from 80 to 110 degrees Celsius (°C.), alternatively from 100 to 108° C., alternatively from 104 to 106° C.; (b) the FB-GPP reactor receiving feeds of respective independently controlled amounts of ethylene, 1-alkene characterized by a 1-alkene-to-ethylene ($C_x/C_2$) molar ratio, the bimodal catalyst system, optionally a trim catalyst

comprising a solution in an inert hydrocarbon liquid of a dissolved amount of unsupported form of the metallocene catalyst made from the metal-ligand complex of formula (I) and activator, optionally hydrogen gas ($H_2$) characterized by a hydrogen-to-ethylene ($H_2/C_2$) molar ratio, and optionally an induced condensing agent (ICA) comprising a ($C_5$-$C_{10}$) alkane(s), e.g., isopentane; wherein the ($C_6/C_2$) molar ratio is from 0.001 to 0.8, alternatively from 0.005 to 0.10; wherein when $H_2$ is fed, the $H_2/C_2$ molar ratio is from 0.0001 to 2.0, alternatively from 0.001 to 0.050; and wherein when the ICA is fed, the concentration of ICA in the reactor is from 1 to 20 mole percent (mol%), alternatively from 2 to 10 mol%, based on total moles of ethylene, 1-alkene, and ICA in the reactor. The average residence time of the copolymer in the reactor may be from 2 to 5 hours, alternatively from 2.5 to 4.5 hours. A continuity additive may be used in the FB-GPP reactor during polymerization.

The bimodal catalyst system may be characterized by an inverse response to bed temperature such that when the bed temperature is increased, the viscoelastic property value of the resulting bimodal poly(ethylene-*co*-1-alkene) copolymer is decreased, and when the bed temperature is decreased, the viscoelastic property value of the resulting bimodal poly(ethylene-co-1-alkene) copolymer is increased. The bimodal catalyst system may be characterized by an inverse response to the $H_2/C_2$ ratio such that when the $H_2/C_2$ ratio is increased, the viscoelastic property value of the resulting bimodal poly(ethylene-*co*-1-alkene) copolymer is decreased, and when the $H_2/C_2$ ratio is decreased, the viscoelastic property value of the resulting bimodal poly(ethylene-*co*-1-alkene) copolymer is increased.

The bimodal poly(ethylene-*co*-1-alkene) copolymer comprises the higher molecular weight poly(ethylene-*co*-1-alkene) copolymer component (HMW copolymer component) and the lower molecular weight poly(ethylene-*co*-1-alkene) copolymer component (LMW copolymer component). The "higher" and "lower" descriptions mean the weight-average molecular weight of the HMW copolymer component ($M_{wH}$) is greater than the weight-average molecular weight of the LMW copolymer component ($M_{wL}$). The bimodal poly(ethylene-*co*-1-alkene) copolymer is characterized by a bimodal weight-average molecular weight distribution (bimodal $M_w$ distribution) as determined by gel permeation chromatography (GPC), described later. The bimodal $M_w$ distribution is not unimodal because the copolymer is made by two distinctly different catalysts. The copolymer may be characterized by two peaks in a plot of dW/dLog(MW) on the y-axis versus Log(MW) on the x-axis to give a Gel Permeation Chromatograph (GPC) chromatogram, wherein Log(MW) and dW/dLog(MW) are as defined herein and are measured by the GPC Test Method described later. The two peaks may be separated by a distinguishable local minimum therebetween or one peak may merely be a shoulder on the other.

The 1-alkene used to make the inventive bimodal poly(ethylene-*co*-1-alkene) copolymer may be a ($C_4$-$C_8$)alpha-olefin, or a combination of any two or more ($C_4$-$C_8$)alpha-olefins. Each ($C_4$-$C_8$)alpha-olefin independently may be 1-butene, 1-pentene, 1-hexene, 4-methyl-1-pentene, 1-heptene, or 1-octene; alternatively 1-butene, 1-hexene, or 1-octene; alternatively 1-butene or 1-hexene; alternatively 1-hexene or 1-octene; alternatively 1-butene; alternatively 1-hexene; alternatively 1-octene; alternatively a combination of 1-butene and 1-hexene; alternatively a combination of 1-hexene and 1-octene. The 1-alkene may be 1-hexene and the bimodal poly(ethylene-*co*-1-alkene) copolymer may be a bimodal poly(ethylene-co-1-hexene) copolymer. When the 1-alkene is a combination of two ($C_4$-$C_8$)alpha-olefins, the bimodal poly(ethylene-co-1-alkene) copolymer is a bimodal poly(ethylene-*co*-1-alkene) terpolymer.

Embodiments of the formulation may comprise a blend of the bimodal poly(ethylene-co-1-alkene) copolymer and a polyethylene homopolymer or a different bimodal ethylene/alpha-olefin copolymer. The alpha-olefin used to make the different bimodal ethylene/alpha-olefin copolymer may be a ($C_3$-$C_{20}$)alpha-olefin, alternatively a ($C_4$-$C_8$)alpha-olefin; alternatively 1-butene, 1-hexene, or 1-octene; alternatively 1-butene; alternatively 1-hexene; alternatively 1-octene. When 1-alkene is used, alternatively when any 1-alkene is used, to make the different bimodal ethylene/alpha-olefin copolymer, a bimodal catalyst system is used that is free of the metallocene catalyst made from the metal-ligand complex of formula (I) and activator.

In an illustrative pilot plant process for making the bimodal polyethylene polymer, a fluidized bed, gas-phase polymerization reactor ("FB-GPP reactor") having a reaction zone dimensioned as 304.8 mm (twelve inch) internal diameter and a 2.4384 meter (8 feet) in straight-side height and containing a fluidized bed of granules of the bimodal polyethylene polymer. Configure the FB-GPP reactor with a recycle gas line for flowing a recycle gas stream. Fit the FB-GPP reactor with gas feed inlets and polymer product outlet. Introduce gaseous feed streams of ethylene and hydrogen together with 1-alkene comonomer (e.g., 1-hexene) below the FB-GPP reactor bed into the recycle gas line. Measure the ($C_5$-$C_{20}$)alkane(s) total concentration in the gas/vapor effluent by sampling the gas/vapor effluent in the recycle gas line. Return the gas/vapor effluent (other than a small portion removed for sampling) to the FB-GPP reactor via the recycle gas line.

Polymerization operating conditions are any variable or combination of variables that may affect a polymerization reaction in the GPP reactor or a composition or property of a bimodal polyethylene copolymer made thereby. The variables may include reactor design and size, catalyst composition and amount; reactant composition and amount; molar ratio of two different reactants; presence or absence of feed gases such as $H_2$ and/or $O_2$, molar ratio of feed gases versus reactants, absence or concentration of interfering materials (e.g., $H_2O$), average polymer residence time in the reactor, partial pressures of constituents, feed rates of monomers, reactor bed temperature (e.g., fluidized bed temperature), nature or sequence of process steps, time periods for transitioning between steps. Variables other than that/those being

described or changed by the method or use may be kept constant.

In operating the method, control individual flow rates of ethylene ("$C_2$"), 1-alkene ("$C_x$", e.g., 1-hexene or "$C_6$" or "$C_x$" wherein x is 6), and any hydrogen ("$H_2$") to maintain a fixed comonomer to ethylene monomer gas molar ratio ($C_x/C_2$, e.g., $C_6/C_2$) equal to a described value, a constant hydrogen to ethylene gas molar ratio ("$H_2/C_2$") equal to a described value, and a constant ethylene ("$C_2$") partial pressure equal to a described value (e.g., 1,000 kPa). Measure concentrations of gases by an in-line gas chromatograph to understand and maintain composition in the recycle gas stream. Maintain a reacting bed of growing polymer particles in a fluidized state by continuously flowing a make-up feed and recycle gas through the reaction zone. Use a superficial gas velocity of 0.49 to 0.67 meter per second (m/sec) (1.6 to 2.2 feet per second (ft/sec)). Operate the FB-GPP reactor at a total pressure of about 2344 to about 2413 kilopascals (kPa) (about 340 to about 350 pounds per square inch-gauge (psig)) and at a described reactor bed temperature RBT. Maintain the fluidized bed at a constant height by withdrawing a portion of the bed at a rate equal to the rate of production of particulate form of the bimodal polyethylene polymer, which production rate may be from 10 to 20 kilograms per hour (kg/hr), alternatively 13 to 18 kg/hr. Remove the produced bimodal poly(ethylene-*co*-1-alkene) copolymer semi-continuously via a series of valves into a fixed volume chamber, and purge the removed composition with a stream of humidified nitrogen ($N_2$) gas to remove entrained hydrocarbons and deactivate any trace quantities of residual catalysts.

The bimodal catalyst system may be fed into the polymerization reactor(s) in "dry mode" or "wet mode", alternatively dry mode, alternatively wet mode. The dry mode is a dry powder or granules. The wet mode is a suspension in an inert liquid such as mineral oil or the ($C_5$-$C_{20}$)alkane(s).

In some aspects bimodal poly(ethylene-*co*-1-alkene) copolymer is made by contacting the metal-ligand complex of formula (I) and the single-site non-metallocene catalyst with at least one activator *in situ* in the GPP reactor in the presence of olefin monomer and comonomer (e.g., ethylene and 1-alkene) and growing polymer chains. These embodiments may be referred to herein as *in* situ-contacting embodiments. In other aspects the metal-ligand complex of formula (I), the single-site non-metallocene catalyst, and the at least one activator are pre-mixed together for a period of time to make an activated bimodal catalyst system, and then the activated bimodal catalyst system is injected into the GPP reactor, where it contacts the olefin monomer and growing polymer chains. These latter embodiments pre-contact the metal-ligand complex of formula (I), the single-site non-metallocene catalyst, and the at least one activator together in the absence of olefin monomer (e.g., in absence of ethylene and alpha-olefin) and growing polymer chains, i.e., in an inert environment, and are referred to herein as pre-contacting embodiments. The premixing period of time of the pre-contacting embodiments may be from 1 second to 10 minutes, alternatively from 30 seconds to 5 minutes, alternatively from 30 seconds to 2 minutes.

The ICA may be fed separately into the FB-GPP reactor or as part of a mixture also containing the bimodal catalyst system. The ICA may be a ($C_{11}$-$C_{20}$)alkane, alternatively a ($C_5$-$C_{10}$)alkane, alternatively a ($C_5$)alkane, e.g., pentane or 2-methylbutane; a hexane; a heptane; an octane; a nonane; a decane; or a combination of any two or more thereof. The aspects of the polymerization method that use the ICA may be referred to as being an induced condensing mode operation (ICMO). ICMO is described in US 4,453,399; US 4,588,790; US 4,994,534; US 5,352,749; US 5,462,999; and US 6,489,408. The concentration of ICA in the reactor is measured indirectly as total concentration of vented ICA in recycle line using gas chromatography by calibrating peak area percent to mole percent (mol%) with a gas mixture standard of known concentrations of ad rem gas phase components.

The method uses a gas-phase polymerization (GPP) reactor, such as a stirred-bed gas phase polymerization reactor (SB-GPP reactor) or a fluidized-bed gas-phase polymerization reactor (FB-GPP reactor), to make the bimodal poly(ethylene-*co*-1-alkene) copolymer. Such gas phase polymerization reactors and methods are generally well-known in the art. For example, the FB-GPP reactor/method may be as described in US 3,709,853; US 4,003,712; US 4,011,382; US 4,302,566; US 4,543,399; US 4,882,400; US 5,352,749; US 5,541,270; EP-A-0 802 202; and Belgian Patent No. 839,380. These SB-GPP and FB-GPP polymerization reactors and processes either mechanically agitate or fluidize by continuous flow of gaseous monomer and diluent the polymerization medium inside the reactor, respectively. Other useful reactors/processes contemplated include series or multistage polymerization processes such as described in US 5,627,242; US 5,665,818; US 5,677,375; EP-A-0 794 200; EP-B1-0 649 992; EP-A-0 802 202; and EP-B-634421.

The polymerization conditions may further include one or more additives such as a chain transfer agent or a promoter. The chain transfer agents are well known and may be alkyl metal such as diethyl zinc. Promoters are known such as in US 4,988,783 and may include chloroform, $CFCl_3$, trichloroethane, and difluorotetrachloroethane. Prior to reactor start up, a scavenging agent may be used to react with moisture and during reactor transitions a scavenging agent may be used to react with excess activator. Scavenging agents may be a trialkylaluminum. Gas phase polymerizations may be operated free of (not deliberately added) scavenging agents. The polymerization conditions for gas phase polymerization reactor/method may further include an amount (e.g., 0.5 to 200 ppm based on all feeds into reactor) of a static control agent and/or a continuity additive such as aluminum stearate or polyethyleneimine. The static control agent may be added to the FB-GPP reactor to inhibit formation or buildup of static charge therein.

The method may use a pilot scale fluidized bed gas phase polymerization reactor (Pilot Reactor) that comprises a reactor vessel containing a fluidized bed of a powder of the bimodal polyethylene polymer, and a distributor plate disposed

above a bottom head, and defining a bottom gas inlet, and having an expanded section, or cyclone system, at the top of the reactor vessel to decrease amount of resin fines that may escape from the fluidized bed. The expanded section defines a gas outlet. The Pilot Reactor further comprises a compressor blower of sufficient power to continuously cycle or loop gas around from out of the gas outlet in the expanded section in the top of the reactor vessel down to and into the bottom gas inlet of the Pilot Reactor and through the distributor plate and fluidized bed. The Pilot Reactor further comprises a cooling system to remove heat of polymerization and maintain the fluidized bed at a target temperature. Compositions of gases such as ethylene, 1-alkene (e.g., 1-hexene), and hydrogen being fed into the Pilot Reactor are monitored by an in-line gas chromatograph in the cycle loop in order to maintain specific concentrations thereof that define and enable control of polymer properties. The bimodal catalyst system may be fed as a slurry or dry powder into the Pilot Reactor from high pressure devices, wherein the slurry is fed via a syringe pump and the dry powder is fed via a metered disk. The bimodal catalyst system typically enters the fluidized bed in the lower 1/3 of its bed height. The Pilot Reactor further comprises a way of weighing the fluidized bed and isolation ports (Product Discharge System) for discharging the powder of bimodal polyethylene polymer from the reactor vessel in response to an increase of the fluidized bed weight as polymerization reaction proceeds.

In some embodiments the FB-GPP reactor is a commercial scale reactor such as a UNIPOL™ reactor, which is available from Univation Technologies, LLC, a subsidiary of The Dow Chemical Company, Midland, Michigan, USA.

The bimodal catalyst system used in the method consists essentially of the metallocene catalyst and the bis((alkyl-substituted phenylamido)ethyl)amine $ZrR^1_2$ catalyst, and, optionally, the host material; wherein the host material, when present, is selected from the at least one of the inert hydrocarbon liquid and the solid support; wherein the metallocene catalyst is an activation reaction product of contacting an activator with a metal-ligand complex of formula (I) described earlier; and wherein the bis((alkyl-substituted phenylamido)ethyl)amine catalyst is an activation reaction product of contacting an activator with the bis((alkyl-substituted phenylamido)ethyl)amine $ZrR^1_2$ catalyst described earlier. The phrase consists essentially of means that the bimodal catalyst system and method using same is free of a third single-site catalyst (e.g., a different metallocene, a different amine catalyst, or a biphenylphenolic catalyst) and free of non-single site catalysts (e.g., free of Ziegler-Natta or chromium catalysts). The bimodal catalyst system may also consist essentially of the host material and/or at least one activator species, which is a by-product of reacting the metallocene catalyst or non-metallocene molecular catalyst with the activator(s).

Without being bound by theory, it is believed that the bis((alkyl-substituted phenylamido)ethyl)amine catalyst (e.g., the bis(2-(pentamethylphenylamido)ethyl)amine zirconium dibenzyl) is a substantially single-site non-metallocene catalyst that is effective for making the HMW copolymer component of the bimodal poly(ethylene-*co*-1-alkene) copolymer and the metallocene catalyst (made from the metal-ligand complex of formula (I) is a substantially single-site catalyst that is independently effective for making the LMW copolymer component of the bimodal poly(ethylene-*co*-1-alkene) copolymer. The molar ratio of the two catalysts of the bimodal catalyst system may be based on the molar ratio of their respective catalytic metal atom (M, e.g., Zr) contents, which may be calculated from ingredient weights thereof or may be analytically measured. The molar ratio of the two catalysts may be varied in the polymerization method by way of using a different bimodal catalyst system formulation having different molar ratio thereof or by using a same bimodal catalyst system and the trim catalyst. Varying the molar ratio of the two catalysts during the polymerization method may be used to vary the particular properties of the bimodal poly(ethylene-*co*-1-alkene) copolymer within the limits of the described features thereof.

The catalysts of the bimodal catalyst system may be unsupported when contacted with an activator, which may be the same or different for the different catalysts. Alternatively, the catalysts may be disposed by spray-drying onto a solid support material prior to being contacted with the activator(s). The solid support material may be uncalcined or calcined prior to being contacted with the catalysts. The solid support material may be a hydrophobic fumed silica (e.g., a fumed silica treated with dimethyldichlorosilane). The bimodal (unsupported or supported) catalyst system may be in the form of a powdery, free-flowing particulate solid.

Support material. The support material may be an inorganic oxide material. The terms "support" and "support material" are the same as used herein and refer to a porous inorganic substance or organic substance. In some embodiments, desirable support materials may be inorganic oxides that include Group 2, 3, 4, 5, 13 or 14 oxides, alternatively Group 13 or 14 atoms. Examples of inorganic oxide-type support materials are silica, alumina, titania, zirconia, thoria, and mixtures of any two or more of such inorganic oxides. Examples of such mixtures are silica-chromium, silica-alumina, and silica-titania.

The inorganic oxide support material is porous and has variable surface area, pore volume, and average particle size. In some embodiments, the surface area is from 50 to 1000 square meter per gram ($m^2/g$) and the average particle size is from 20 to 300 micrometers ($\mu m$). Alternatively, the pore volume is from 0.5 to 6.0 cubic centimeters per gram ($cm^3/g$) and the surface area is from 200 to 600 $m^2/g$. Alternatively, the pore volume is from 1.1 to 1.8 $cm^3/g$ and the surface area is from 245 to 375 $m^2/g$. Alternatively, the pore volume is from 2.4 to 3.7 $cm^3/g$ and the surface area is from 410 to 620 $m^2/g$. Alternatively, the pore volume is from 0.9 to 1.4 $cm^3/g$ and the surface area is from 390 to 590 $m^2/g$. Each of the above properties are measured using conventional techniques known in the art.

The support material may comprise silica, alternatively amorphous silica (not quartz), alternatively a high surface area amorphous silica (e.g., from 500 to 1000 $m^2/g$). Such silicas are commercially available from several sources including the Davison Chemical Division of W.R. Grace and Company (e.g., Davison 952 and Davison 955 products), and PQ Corporation (e.g., ES70 product). The silica may be in the form of spherical particles, which are obtained by a spray-drying process. Alternatively, MS3050 product is a silica from PQ Corporation that is not spray-dried. As procured, these silicas are not calcined (i.e., not dehydrated). Silica that is calcined prior to purchase may also be used as the support material.

Prior to being contacted with a catalyst, the support material may be pre-treated by heating the support material in air to give a calcined support material. The pre-treating comprises heating the support material at a peak temperature from 350° to 850° C., alternatively from 400° to 800° C., alternatively from 400° to 700° C., alternatively from 500° to 650° C. and for a time period from 2 to 24 hours, alternatively from 4 to 16 hours, alternatively from 8 to 12 hours, alternatively from 1 to 4 hours, thereby making a calcined support material. The support material may be a calcined support material.

The method may further employ a trim catalyst. The trim catalyst may be any one of the aforementioned metallocene catalysts made from the metal-ligand complex of formula (I) and activator. For convenience the trim catalyst, or the metal-ligand complex of formula (I) without activator, is fed in solution in a hydrocarbon solvent (e.g., mineral oil or heptane). The hydrocarbon solvent may be the ICA. The trim catalyst may be made from the same metal-ligand complex of formula (I) as that used to make the metallocene catalyst of the bimodal catalyst system, alternatively the trim catalyst may be made from a different metal-ligand complex of formula (I) than that used to make the metallocene catalyst of the bimodal catalyst system. The trim catalyst may be used to vary, within limits, the amount of the metallocene catalyst used in the method relative to the amount of the single-site non-metallocene catalyst of the bimodal catalyst system.

Each catalyst of the bimodal catalyst system is activated by contacting it with an activator. Any activator may be the same or different as another and independently may be a Lewis acid, a non-coordinating ionic activator, or an ionizing activator, or a Lewis base, an alkylaluminum, or an alkylaluminoxane (alkylalumoxane). The alkylaluminum may be a trialkylaluminum, alkylaluminum halide, or alkylaluminum alkoxide (diethylaluminum ethoxide). The trialkylaluminum may be trimethylaluminum, triethylaluminum ("TEAl"), tripropylaluminum, or tris(2-methylpropyl)aluminum. The alkylaluminum halide may be diethylaluminum chloride. The alkylaluminum alkoxide may be diethylaluminum ethoxide. The alkylaluminoxane may be a methylaluminoxane (MAO), ethylaluminoxane, 2-methylpropyl-aluminoxane, or a modified methylaluminoxane (MMAO). Each alkyl of the alkylaluminum or alkylaluminoxane independently may be a $(C_1\text{-}C_7)$alkyl, alternatively a $(C_1\text{-}C_6)$alkyl, alternatively a $(C_1\text{-}C_4)$alkyl. The molar ratio of activator's metal (Al) to a particular catalyst compound's metal (catalytic metal, e.g., Zr) may be 1000:1 to 0.5:1, alternatively 300:1 to 1:1, alternatively 150:1 to 1:1. Suitable activators are commercially available.

Once the activator and the catalysts of the bimodal catalyst system contact each other, the catalysts of the bimodal catalyst system are activated, and activator species may be made *in situ.* The activator species may have a different structure or composition than the catalyst and activator from which it is derived and may be a by-product of the activation of the catalyst or may be a derivative of the by-product. The corresponding activator species may be a derivative of the Lewis acid, non-coordinating ionic activator, ionizing activator, Lewis base, alkylaluminum, or alkylaluminoxane, respectively. An example of the derivative of the by-product is a methylaluminoxane species that is formed by devolatilizing during spray-drying of a bimodal catalyst system made with methylaluminoxane.

Each contacting step between activator and catalyst independently may be done either in a separate vessel outside the GPP reactor (e.g., outside the FB-GPP reactor) or in a feed line to the GPP reactor. In option (a) the bimodal catalyst system, once its catalysts are activated, may be fed into the GPP reactor as a dry powder, alternatively as a slurry in a non-polar, aprotic (hydrocarbon) solvent. The activator(s) may be fed into the reactor in "wet mode" in the form of a solution thereof in an inert liquid such as mineral oil or toluene, in slurry mode as a suspension, or in dry mode as a powder. Each contacting step may be done at the same or different times.

Any compound, composition, formulation, mixture, or product herein may be free of any one of the chemical elements selected from the group consisting of: H, Li, Be, B, C, N, O, F, Na, Mg, Al, Si, P, S, Cl, K, Ca, Sc, Ti, V, Cr, Mn, Fe, Co, Ni, Cu, Zn, Ga, Ge, As, Se, Br, Rb, Sr, Y, Zr, Nb, Mo, Tc, Ru, Rh, Pd, Ag, Cd, In, Sn, Sb, Te, I, Cs, Ba, Hf, Ta, W, Re, Os, Ir, Pt, Au, Hg, Tl, Pb, Bi, lanthanoids, and actinoids; with the proviso that any required chemical elements (e.g., C and H required by a polyolefin; or C, H, and O required by an alcohol) are not excluded.

Alternatively precedes a distinct embodiment. ASTM means the standards organization, ASTM International, West Conshohocken, Pennsylvania, USA. Any comparative example is used for illustration purposes only and shall not be prior art. Free of or lacks means a complete absence of; alternatively not detectable. ISO is International Organization for Standardization, Chemin de Blandonnet 8, CP 401 - 1214 Vernier, Geneva, Switzerland. IUPAC is International Union of Pure and Applied Chemistry (IUPAC Secretariat, Research Triangle Park, North Carolina, USA). May confers a permitted choice, not an imperative. Operative means functionally capable or effective. Optional(ly) means is absent (or excluded), alternatively is present (or included). PAS is Publicly Available Specification, Deutsches Institut für Normunng e.V. (DIN, German Institute for Standardization) Properties may be measured using standard test methods and conditions. Ranges include endpoints, subranges, and whole and/or fractional values subsumed therein, except a range of integers does not

include fractional values. Room temperature: 23° C. ± 1° C.

Terms used herein have their IUPAC meanings unless defined otherwise. For example, see Compendium of Chemical Terminology. Gold Book, version 2.3.3, February 24, 2014.

The relative terms "higher" and "lower" in HMW and LMW are used in reference to each other and merely mean that the weight-average molecular weight of the HMW component ($M_{w-HMW}$) is greater than the weight-average molecular weight of the LMW component ($M_{w-LMW}$), i.e., $M_{w-HMW} > M_{w-LMW}$.

Activator. Substance, other than a catalyst or monomer, that increases the rate of a catalyzed reaction without itself being consumed. May contain aluminum and/or boron.

Bimodal in reference to a polymer may be characterized by a bimodal molecular weight distribution (bimodal MWD) as determined by gel permeation chromatography (GPC). The bimodal MWD may be characterized as two peaks in a plot of dW/dLog(MW) on the y-axis versus Log(MW) on the x-axis to give a Gel Permeation Chromatograph (GPC) chromatogram, wherein Log(MW) and dW/dLog(MW) are as defined herein and are measured by the GPC Test Method described later. The two peaks may be separated by a distinguishable local minimum therebetween or one peak may merely be a shoulder on the other, or both peaks may partly overlap so as to appear is a single GPC peak.

Copolymer. A macromolecule having constituent units derived from polymerizing a monomer and at least comonomer, which is different in structure than the monomer.

Dry. Generally, a moisture content from 0 to less than 5 parts per million based on total parts by weight. Materials fed to the reactor(s) during a polymerization reaction are dry.

Feed. Quantity of reactant or reagent that is added or "fed" into a reactor. In continuous polymerization operation, each feed independently may be continuous or intermittent. The quantities or "feeds" may be measured, e.g., by metering, to control amounts and relative amounts of the various reactants and reagents in the reactor at any given time.

Feed line. A pipe or conduit structure for transporting a feed.

Inert. Generally, not (appreciably) reactive or not (appreciably) interfering therewith in the inventive polymerization reaction. The term "inert" as applied to the purge gas or ethylene feed means a molecular oxygen ($O_2$) content from 0 to less than 5 parts per million based on total parts by weight of the purge gas or ethylene feed.

Metallocene catalyst. Homogeneous or heterogeneous material that contains a cyclopentadienyl ligand-metal complex and enhances olefin polymerization reaction rates. Substantially single site or dual site. Each metal is a transition metal Ti, Zr, or Hf. Each cyclopentadienyl ligand independently is an unsubstituted cyclopentadienyl group or a hydrocarbyl-substituted cyclopentadienyl group (e.g., an unsubstituted or alkyl-substituted indenyl). The metallocene catalyst may have two cyclopentadienyl ligands, and at least one, alternatively both cyclopentadienyl ligands independently is a hydrocarbyl-substituted cyclopentadienyl group. Each hydrocarbyl-substituted cyclopentadienyl group may independently have 1, 2, 3, 4, or 5 hydrocarbyl substituents. Each hydrocarbyl substituent may independently be a ($C_1$-$C_4$) alkyl. Two or more substituents may be bonded together to form a divalent substituent, which with carbon atoms of the cyclopentadienyl group may form a ring.

Single-site catalyst. An organic ligand-metal complex useful for enhancing rates of polymerization of olefin monomers and having at most two discrete binding sites at the metal available for coordination to an olefin monomer molecule prior to insertion on a propagating polymer chain.

Single-site non-metallocene catalyst. A substantially single-site or dual site, homogeneous or heterogeneous material that is free of an unsubstituted or substituted cyclopentadienyl ligand, but instead has one or more functional ligands such as bisphenyl phenol or carboxamide-containing ligands.

Ziegler-Natta catalysts. Heterogeneous materials that enhance olefin polymerization reaction rates and are prepared by contacting inorganic titanium compounds, such as titanium halides supported on a magnesium chloride support, with an activator.

EXAMPLES

Deconvoluting Test Method: Fit a GPC chromatogram of a bimodal polyethylene into a high molecular weight (HMW) component fraction and low molecular weight (LMW) component fraction using a Flory Distribution that was broadened with a normal distribution function as follows. For the log M axis, establish 501 equally-spaced Log(M) indices, spaced by 0.01, from Log(M) 2 and Log(M) 7, which range represents molecular weight from 100 to 10,000,000 grams per mole. Log is the logarithm function to the base 10. At any given Log(M), the population of the Flory distribution is in the form of the following equation: $dW_f = \left(\frac{2}{M_w}\right)^3 \left(\frac{M_w}{0.868588961964}\right) M^2 e^{\left(-2M/M_w\right)}$, wherein $M_w$ is the weight-average molecular weight of the Flory distribution; M is the specific x-axis molecular weight point, (10 ^ [Log(M)]); and $dW_f$ is a weight fraction distribution of the population of the Flory distribution. Broaden the Flory distribution weight fraction, $dW_f$, at each 0.01 equally-spaced log(M) index according to a normal distribution function, of width expressed in Log(M), $\sigma$; and

current M index expressed as Log(M), $\mu$. $f_{(LogM,\mu,\sigma)} = \frac{e^{-\frac{(LogM-\mu)^2}{2\sigma^2}}}{\sigma\sqrt{2\pi}}$. Before and after the spreading function has been applied, the area of the distribution ($dW_f/dLogM$) as a function of Log(M) is normalized to 1. Express two weight-fraction distributions, $dW_{f\text{-}HMW}$ and $dW_{f\text{-}LMW}$, for the HMW copolymer component fraction and the LMW copolymer component fraction, respectively, with two unique $M_w$ target values, $M_{w\text{-}HMW}$ and $M_{w\text{-}LMW}$, respectively, and with overall component compositions $A_{HMW}$ and $A_{LMW}$, respectively. Both distributions were broadened with independent widths, $\sigma$ (i.e., $\sigma_{HMW}$ and $\sigma_{LMW}$, respectively). The two distributions were summed $dW_f = A_{HMW}dW_{fHMW} + A_{LMW}dW_{fLMW}$ as follows: , wherein $A_{HMW} + A_{LMW} = 1$. Interpolate the weight fraction result of the measured (from conventional GPC) GPC molecular weight distribution along the 501 log M indices using a 2nd-order polynomial. Use Microsoft Excel™ 2010 Solver to minimize the sum of squares of residuals for the equally-spaces range of 501 LogM indices between the interpolated chromatographically determined molecular weight distribution and the three broadened Flory distribution components ($\sigma_{HMW}$ and $\sigma_{LMW}$), weighted with their respective component compositions, $A_{HMW}$ and $A_{LMW}$. The iteration starting values for the components are as follows: Component 1: Mw = 30,000, $\sigma$ = 0.300, and A = 0.500; and Component 2: Mw = 250,000, $\sigma$ = 0.300, and A = 0.500. The bounds for components $\sigma_{HMW}$ and $\sigma_{LMW}$ are constrained such that $\sigma$ > 0.001, yielding an $M_w/M_n$ of approximately 2.00 and $\sigma$ < 0.500. The composition, A, is constrained between 0.000 and 1.000. The $M_w$ is constrained between 2,500 and 2,000,000. Use the "GRG Nonlinear" engine in Excel Solver™ and set precision at 0.00001 and convergence at 0.0001. Obtain the solutions after convergence (in all cases shown, the solution converged within 60 iterations).

Density is measured according to ASTM D792-13, Standard Test Methods for Density and Specific Gravity (Relative Density) of Plastics by Displacement, Method B (for testing solid plastics in liquids other than water, e.g., in liquid 2-propanol). Report results in units of grams per cubic centimeter ($g/cm^3$).

Environmental Stress-Cracking Resistance (ESCR) Test Method: ESCR measurements are conducted according to ASTM D1693-15, Standard Test Method for Environmental Stress-Cracking of Ethylene Plastics, Method B and ESCR (10% Igepal, F50) is the number of hours to failure of a bent, notched, compression-molded test specimen that is immersed in a solution of 10 weight percent Igepal in water at a temperature of 50° C.

**Gel** permeation chromatography (GPC) Test Method: Use a PolymerChar GPC-IR (Valencia, Spain) high temperature GPC chromatograph equipped with an internal IR5 infra-red detector (IR5, measurement channel). Set temperatures of the autosampler oven compartment at 160° C. and column compartment at 150º C. Use a column set of four Agilent "Mixed A" 30cm 20-micron linear mixed-bed columns; solvent is 1,2,4 trichlorobenzene (TCB) that contains 200 ppm of butylated hydroxytoluene (BHT) sparged with nitrogen. Injection volume is 200 microliters. Set flow rate to 1.0 milliliter/minute. Calibrate the column set with at least 20 narrow molecular weight distribution polystyrene (PS) standards (Agilent Technologies) arranged in six "cocktail" mixtures with approximately a decade of separation between individual molecular weights with molecular weights ranging from 580 to 8,400,000 in each vial. Convert the PS standard peak molecular weights to polyethylene molecular weights using the method described in Williams and Ward, J. Polym. Sci., Polym. Let., 6, 621 (1968) and equation *1:* ($M_{polyethylene} = A \times (M_{polystyrene})^B$ (EQ1), wherein $M_{polyethylene}$ is molecular weight of polyethylene, $M_{polystyrene}$ is molecular weight of polystyrene, A = 0.4315, x indicates multiplication, and B = 1.0; where MPE = MPS x Q, where Q ranges between 0.39 to 0.44 to correct for column resolution and band-broadening effects) based on a linear homopolymer polyethylene molecular weight standard of approximately 120,000 and a polydispersity of approximately 3, which is measured independently by light scattering for absolute molecular weight. Dissolve samples at 2 mg/mL in TCB solvent at 160° C for 2 hours under low-speed shaking. Generate a baseline-subtracted infra-red (IR) chromatogram at each equally-spaced data collection point (i), and obtain polyethylene equivalent molecular weight from a narrow standard calibration curve for each point (i) from EQ1. Calculate number-average molecular weight ($M_n$ or $M_{n(GPC)}$), weight-average molecular weight ($M_w$ or $M_{w(GPC)}$), and z-average molecular weight ($M_Z$ or $M_{Z(GPC)}$) based on GPC results using the internal IR5 detector (measurement channel) with PolymerChar GPCOne™ software and equations 2 to 4, respectively: equation 2:

$$Mn_{(GPC)} = \frac{\sum^{i} IR_i}{\sum^{i}\left( IR_i / M_{polyethylene_i} \right)}$$

equation 3:

$$Mw_{(GPC)} = \frac{\sum^{i}\left(IR_i * M_{polyethylene_i}\right)}{\sum^{i} IR_i} \quad \text{(EQ3);}$$

and equation 4:

$$Mz_{(GPC)} = \frac{\sum^{i}\left(IR_i * M_{polyethylene_i}{}^2\right)}{\sum^{i}\left(IR_i * M_{polyethylene_i}\right)} \quad \text{(EQ4).}$$

Monitor effective flow rate over time using decane as a nominal flow rate marker during sample runs. Look for deviations from the nominal decane flow rate obtained during narrow standards calibration runs. If necessary, adjust the effective flow rate of decane so as to stay within ± 2% of the nominal flow rate of decane as calculated according to equation 5: Flow rate(effective) = Flow rate(nominal) * ($RV_{(FM\ Calculated)}$ / $RV_{(FM\ Sample)}$ (EQ5), wherein Flow rate(effective) is the effective flow rate of decane, Flowrate(nominal) is the nominal flow rate of decane, $RV_{(FM}$ Calibrated) is retention volume of flow rate marker decane calculated for column calibration run using narrow standards, $RV_{(FM}$ Sample) is retention volume of flow rate marker decane calculated from sample run, * indicates mathematical multiplication, and / indicates mathematical division. Discard any molecular weight data from a sample run with a decane flow rate deviation more than ± 2%.

High Load Melt Index (HLMI) $I_{21}$ Test Method: use ASTM D1238-13, *Standard Test Method for Melt Flow Rates of Thermoplastics by Extrusion Platometer,* using conditions of 190° C./21.6 kilograms (kg). Report results in units of grams eluted per 10 minutes (g/10 min.).

Melt Index ("$I_2$") Test Method: for ethylene-based (co)polymer is measured according to ASTM D1238-13, using conditions of 190° C./2.16 kg, formerly known as "Condition E".

Melt Index $I_5$ ("$I_5$") Test Method: use ASTM D1238-13, using conditions of 190° C./5.0 kg. Report results in units of grams eluted per 10 minutes (g/10 min.).

Melt Flow Ratio MFR2: ("$I_{21}/I_2$") Test Method: calculated by dividing the value from the HLMI $I_{21}$ Test Method by the value from the Melt Index $I_2$ Test Method.

Melt Flow Ratio MFR5: ("$I_{21}/I_5$") Test Method: calculated by dividing the value from the HLMI $I_{21}$ Test Method by the value from the Melt Index $I_5$ Test Method.

Melt Strength Test Method: Carried out Rheotens (Göttfert) melt strength experiments at 190° C.. Produced a melt by a Göttfert Rheotester 2000 capillary rheometer with a flat, 30/2 die at a shear rate of 38.2 s-1. Filled the barrel of the rheometer in less than one minute. Waited 10 minutes to ensure proper melting. Varied take-up speed of the Rheotens wheels with a constant acceleration of 2.4 $mm/s^2$. Monitored tension in the drawn strand over time until the strand broke. Calculated melt strength by averaging the flat range of tension.

Resin Swell t1000 Test Method: Characterized resin swell in terms of extrudate swell. In this approach determined the time required by an extruded polymer strand to travel a predetermined distance of 23 cm. The more the resin swells, the slower the free end of the strand travels, and the longer it takes to cover the 23 cm distance. Used a 12 mm barrel Göttfert Rheograph equipped with a 10 L/D capillary die for measurements. Carried out measurements at 190° C. at a fixed shear rate of 1000 sec-1. Reported the resin swell as t1000 value.

Antioxidant: 1. Pentaerythritol tetrakis(3-(3,5-di(1',1'-dimethylethyl)-4-hydroxyphenyl)propionate); obtained as IRGANOX 1010 from BASF.

Antioxidant 2. Tris(2,4-di(1',1'-dimethylethyl)-phenyl)phosphite. Obtained as IRGAFOS 168 from BASF.

CA-300: a continuity additive available from Univation Technologies, LLC.

Catalyst Neutralizer: 1. Calcium stearate.

1-Alkene Comonomer: 1-hexene or $H_2C{=}C(H)(CH_2)_3CH_3$.

Ethylene ("$C_2$"): $CH_2{=}CH_2$.

ICA: a mixture consisting essentially of at least 95%, alternatively at least 98% of 2-methylbutane (isopentane) and minor constituents that at least include pentane ($CH_3(CH_2)_3CH_3$).

Molecular hydrogen gas: $H_2$.

Mineral oil: Sonneborn HYDROBRITE 380 PO White.

10% Igepal means a 10 wt% solution of Igepal CO-630 in water, wherein Igepal CO-630 is an ethoxylated branched-nonylphenol of structural formula 4-(branched-$C_9H_{19}$)-phenyl-$[OCH_2CH_2]_n$-OH, wherein subscript n is a number such that the branched ethoxylated nonylphenol has a number-average molecular weight of about 619 grams/mole.

Preparation 1: synthesis of 3,6-dimethyl-1*H*-indene, of the formula

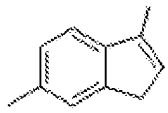

.

In a glove box, a 250-mL two-neck container fitted with a thermometer (side neck) and a solids addition funnel, was charged with tetrahydrofuran (25 mL) and methylmagnesium bromide (2 equivalents, 18.24 mL, 54.72 mmol). The contents of the container were cooled in a freezer set at -35 °C for 40 minutes; when removed from the freezer, the contents of the container were measured to be -12 °C. While stirring, indanone [5-Methyl-2,3-dihydro-1H-inden-1-one (catalog #HC-2282)] (1 equivalent, 4.000 g, 27.36 mmol) was added to the container as a solid in small portions and the temperature increased due to exothermic reaction; additions were controlled to keep the temperature at or below room temperature. Once the addition was complete, the funnel was removed, and the container was sealed (SUBA). The sealed container was moved to a fume hood (with the contents already at room temperature) and put under a nitrogen purge, then stirred for 3 hours. The nitrogen purge was removed, diethyl ether (25 mL) was added to the container to replace evaporated solvent, and then the reaction was cooled using an acetone/ice bath. A HCl (15% volume) solution (9 equivalents, 50.67 mL, 246.3 mmol) was added to the contents of the container very slowly using an addition funnel, the temperature was maintained below 10 °C. Then, the contents of the container were warmed up slowly for approximately 12 hours (with the bath in place). Then, the contents of the container were transferred to a separatory funnel and the phases were isolated. The aqueous phase was washed with diethyl ether (3 times 25 mL). The combined organic phases were then washed with sodium bicarbonate (50 mL, saturated aqueous solution), water (50 mL), and brine (50 mL). The organic phase was dried over magnesium sulfate, filtered and the solvent removed by rotary evaporator. The resulting dark oil, confirmed as product by NMR, was dissolved in pentane (25 mL), then filtered through a short silica plug (pre-wetted with pentane) that was capped with sodium sulfate. Additional pentane (25-35 mL) was used to flush the plug, then were combined with the first. The solution was dried by rotary evaporator resulting in 2.87 g (74% yield) of 3,6-dimethyl-1H-indene that was confirmed as product by NMR. $^1$H NMR ($C_6D_6$): δ 7.18 (d, 1H), 7.09 (s, 1H), 7.08 (d, 1H), 5.93 (m, 1H), 3.07 (m, 2H), 2.27 (s, 3H), 2.01 (q, 3H).

Preparation 2: synthesis of spray-dried, activated bis(2-(pentamethylphenylamido)ethyl)amine zirconium dibenzyl on hydrophobic fumed silica. Slurried 1.5 kg of hydrophobic surface treated fumed silica (Cabosil TS-610) in 16.8 kg of toluene, then added a 10 wt% solution (11.1 kg) methylaluminoxane (MAO) in toluene and 54.5 g of HN5. Introduced the resulting mixture into an atomizing device, producing droplets that were then contacted with a hot nitrogen gas stream to evaporate the liquid and form a powder. The powder was separated from the gas mixture in a cyclone separator and discharged into a container. Spray-dried in a spray drier with dryer temperature set at 160° C. and outlet temperature at 70° to 80° C. Collected the spray-dried catalyst as a fine powder. Stirred the collected powder in n-hexane and mineral oil to give a non-metallocene single site catalyst formulation of 16 wt% solids in 10 wt% n-hexane and 74 wt% mineral oil and activated bis(2-(pentamethylphenylamido)ethyl)amine zirconium dibenzyl. The bis(2-(pentamethylphenylamido)ethyl) amine zirconium dibenzyl is a compound of formula (II) wherein M is Zr and each $R^1$ is benzyl and may be made by procedures described in the art or obtained from Univation Technologies, LLC, Houston, Texas, USA, a wholly-owned entity of The Dow Chemical Company, Midland, Michigan, USA.

Inventive Example 1 (IE1): synthesis of (cyclopentadienyl)(1,5-dimethylindenyl)zirconium dimethyl, which is a compound of formula (I) wherein R is H and each X is methyl. In a glovebox under an anhydrous inert gas atmosphere (anhydrous nitrogen or argon gas), 3,6-dimethyl-1H-indene (1.000g, 6.94 moles) in dimethoxyethane (10 mL) was added to a 120 mL (4-ounce (oz)) container, which was then capped, and the contents of the container were chilled to -35 °C. *n*-butyllithium (1.6M hexanes, 4.3 mL, 0.0069 mole) was added to the container and the contents were stirred for approximately 3 hours while heat was removed to maintain the contents of the container near -35 °C. Reaction progress was monitored by dissolving a small aliquot in d8-THF for $^1$H NMR analysis; when the reaction was complete, solid cyclopentadienyl zirconium trichloride ($CpZrCl_3$) (1.821 g) was added in portions to the contents of the container while stirring. Reaction progress was monitored by dissolving a small aliquot in d8-THF for $^1$H NMR analysis; the reaction was complete after approximately 3 hours and the contents of the container were stirred for approximately 12 more hours. Then, methylmagnesium bromide (3.0M in ether, 4.6 mL) was added to the contents of the container, after the addition the contents of the container were stirred for approximately 12 hours. Then, solvent was removed in vacuo and the product was extracted into hexane (40 mL) and filtered through diatomaceous earth, washed with additional hexane (30 mL) and then dried in vacuo to provide the cyclopentadienyl(1,5-dimethylindenyl) zirconium dimethyl. (Cyclopentadienyl)(1,5-dimethylindenyl)zirconium dimethyl was confirmed by proton nuclear magnetic resonance spectroscopy ($^1$H NMR) analysis. $^1$H NMR ($C_6D_6$): δ 7.26 (d, 1H), 6.92 (d, 1H), 6.83 (dd, 1H), 5.69 (d, 1H), 5.65 (m, 1H), 5.64 (s, 5H), 2.18 (s, 3H), 2.16 (s, 3H), -0.34 (s, 3H), -0.62 (s, 3H).

Due to the rules of IUPAC nomenclature it is believed that the dimethyl numbering in the molecule 3,6-dimethyl-1*H*-indene becomes, after deprotonation thereof, becomes in the conjugate anion 1,5-dimethylindenyl.

Inventive Example 1A (IE1A): synthesis of (cyclopentadienyl)(1,5-dimethylindenyl)zirconium dichloride, which is a compound of formula (I) wherein R is H and each X is Cl. In a glovebox, charged an eight-ounce jar with 3,6-dimethyl-1*H*-indene (5.00 g, 34.7 mmol) and hexane (100 mL). While stirring with magnetic stir bar, slowly added n-butyllithium (1.6M in hexanes, 23.8 mL, 38.1 mmol). After stirring overnight, filtered the resulting precipitated white solid, washed the filtercake thoroughly with hexane (3 times 20 mL), and dried *in vacuo* to yield 1,5-dimethylindenyllithium (4.88 g, 93.7% yield) as a white solid. In a glovebox, dissolved a portion of the 1,5-dimethylindenyllithium (2.315 g, 15.42 mmol) in dimethoxyethane (60 mL) in a four-ounce jar, and added $CpZrCl_3$ (4.05 g, 15.42 mmol) in portions as a solid. After stirring overnight, removed solvents *in vacuo,* and took up the residue in toluene (110 mL) at 60° C., and filtered. NMR analysis of an aliquot of the filtrate showed the title product. In order to purify the product, decreased the volume of the filtrate *in vacuo* to 40 mL, and raised the temperature thereof to 80° C. to dissolve solids. Slowly cooled the resulting solution to room temperature, and held it in a freezer (-32° C.) to produce recrystallized product. Collected by filtration and washed with hexane (2 times 10 mL), then dried *in vacuo* to yield (cyclopentadienyl)(1,5-dimethylindenyl)zirconium dichloride as a bright yellow solid (4.09 g, 71.6%). $^1$H NMR ($C_6D_6$): δ 7.32 (m, 1H), 6.90 (dt, 1H), 6.75 (dd, 1H), 6.19 (dq, 1H), 5.76 (s, 5H), 5.73 (m, 1H), 2.35 (d, 3H), 2.08 (d, 3H).

Inventive Example 2 (IE2): prophetic synthesis of (methylcyclopentadienyl)(1,5-dimethylindenyl)zirconium dimethyl, which is a compound of formula (I) wherein R is methyl and each X is methyl. Replicate the synthesis of Example 1 except used methylcyclopentadienyl zirconium trichloride ($MeCpZrCl_3$) in place of the cyclopentadienyl zirconium trichloride ($CpZrCl_3$), wherein the number of moles of $MeCpZrCl_3$ was the same as that of $CpZrCl_3$.

Inventive Example 2A (IE2A): synthesis of (methylcyclopentadienyl)(1,5-dimethylindenyl)zirconium dichloride, which is a compound of formula (I) wherein R is $CH_3$ and each X is Cl. Synthesized 1,5-dimethylindenyllithium as described in IE1A. In a glovebox, dissolved 1,5-dimethylindenyllithium (0.500 g, 3.33 mmol) in dimethoxyethane (30 mL) in a four-ounce jar, and added $MeCpZrCl_3$ (0.921 g, 3.33 mmol) in portions as a solid. After stirring overnight, removed solvents *in vacuo,* and took up the residue in dichloromethane (40 mL), and filtered. NMR analysis of an aliquot of the filtrate showed the title product. In order to purify the product, decreased the volume of the filtrate *in vacuo* to 20 mL, added hexane (20 mL), and cooled the resulting solution in a glovebox freezer (-32° C.) to produce recrystallized product. Collected by filtration and washed with hexane (3 times 5 mL), then dried in vacuo to yield (methylcyclopentadienyl)(1,5-dimethylindenyl)zirconium dichloride (0.527 g, 41.1%). $^1$H NMR ($C_6D_6$): δ 7.32 (m, 1H), 6.93 (m, 1H), 6.75 (dd, 1H), 6.25 (dd, 1H), 5.76 (m, 2H), 5.58 (m, 1H), 5.52 (m, 1H), 5.38 (td, 1H), 2.37 (d, 3H), 2.09 (d, 3H), 2.01 (s, 3H).

Inventive Example 3 (IE3): prophetic synthesis of (ethylcyclopentadienyl)(1,5-dimethylindenyl)zirconium dimethyl, which is a compound of formula (I) wherein R is ethyl and each X is methyl. Replicate the synthesis of Example 1 except used ethylcyclopentadienyl zirconium trichloride ($EtCpZrCl_3$) in place of the cyclopentadienyl zirconium trichloride ($CpZrCl_3$), wherein the number of moles of $EtCpZrCl_3$ was the same as that of $CpZrCl_3$.

Inventive Example 3A (IE3A): prophetic synthesis of (ethylcyclopentadienyl)(1,5-dimethylindenyl)zirconium dichloride, which is a compound of formula (I) wherein R is $CH_2CH_3$ and each X is Cl. Replicate the procedure of IE2A except use $EtCpZrCl_3$ instead of the $MeCpZrCl_3$ to give (ethylcyclopentadienyl(1,5-dimethylindenyl)zirconium dichloride. Confirm structure by $^1$H NMR.

Inventive Example 4 (IE4): preparation of a trim solution of (cyclopentadienyl)(1,5-dimethylindenyl)zirconium dimethyl. Charge (cyclopentadienyl)(1,5-dimethylindenyl)zirconium dimethyl of IE1 and n-hexane into a first cylinder. Charge the resulting solution of cyclopentadienyl(1,5-dimethylindenyl) zirconium dimethyl solution in hexane from the first cylinder into a 106 liter (L; 28 gallons) second cylinder. The second cylinder contained 310 grams of 1.07 wt % (cyclopentadienyl)(1,5-dimethylindenyl)zirconium dimethyl. Added 7.98 kg (17.6 pounds) of high purity isopentane to the 106 L cylinder to yield a trim solution of 0.04 wt % (cyclopentadienyl)(1,5-dimethylindenyl)zirconium dimethyl in n-hexane.

Inventive Example 5 (IE5): prophetic preparation of a trim solution of methylcyclopentadienyl(1,5-dimethylindenyl) zirconium dimethyl. Replicate the procedure of IE4 except use (methylcyclopentadienyl)(1,5-dimethylindenyl) zirconium dimethyl of IE2 in place of the (cyclopentadienyl)(1,5-dimethylindenyl)zirconium dimethyl of IE1 to yield a trim solution of 0.04 wt % (methylcyclopentadienyl)(1,5-dimethylindenyl)zirconium dimethyl in n-hexane.

Inventive Example 6 (IE6): prophetic preparation of a trim solution of (ethylcyclopentadienyl)(1,5-dimethylindenyl)zirconium dimethyl. Replicate the procedure of IE4 except use (ethylcyclopentadienyl)(1,5-dimethylindenyl)zirconium dimethyl of IE3 in place of the (cyclopentadienyl)(1,5-dimethylindenyl)zirconium dimethyl of IE1 to yield a trim solution of 0.04 wt % (ethylcyclopentadienyl)(1,5-dimethylindenyl)zirconium dimethyl in n-hexane.

Inventive Example 7 (IE7): Bimodal Catalyst System 1 (BMC1). In a pre-contacting embodiment, fed the slurry of non-metallocene single site catalyst formulation of 16 wt% solids in 10 wt% n-hexane and 74 wt% mineral oil and activated

bis(2-(pentamethylphenylamido)ethyl)amine zirconium dibenzyl made in Preparation 2 through a catalyst injection tube, wherein it is contacted with a stream of the trim solution of the (cyclopentadienyl)(1,5-dimethylindenyl)zirconium dimethyl of Example 4 to make the BMC1. The BMC1 is made outside of the GPP reactor and shortly thereafter enters the GPP reactor in the polymerization of Inventive Example A described below. Set the ratio feed of trim solution of (cyclopentadienyl)(1,5-dimethylindenyl)zirconium dimethyl of Example 4 to the feed of the non-metallocene single site catalyst formulation of Preparation 1 to adjust the HLMI of the produced bimodal poly(ethylene-*co*-1-hexene) copolymer in the reactor to approximately 30 g/10 min. Set the catalyst feeds at rates sufficient to maintain a production rate of about 16 to about 18 kg/hour (about 35 to about 40 lbs/hr) of the bimodal poly(ethylene-*co*-1-hexene) copolymer.

Inventive Example 8 (IE8): prophetic Bimodal Catalyst System 2 (BMC2): replicate the procedure of IE7 except use the trim solution of (methylcyclopentadienyl)(1,5-dimethylindenyl)zirconium dimethyl of Example 5 instead of the trim solution of (cyclopentadienyl)(1,5-dimethylindenyl)zirconium dimethyl of Example 4 to make the BMC2 outside the GPP reactor.

Inventive Example 9 (IE9): prophetic Bimodal Catalyst System 3 (BMC3): replicate the procedure of IE7 except use the trim solution of (ethylcyclopentadienyl)(1,5-dimethylindenyl)zirconium dimethyl of Example 6 instead of the trim solution of (cyclopentadienyl)(1,5-dimethylindenyl)zirconium dimethyl of Example 4 to make the BMC3 outside the GPP reactor.

Inventive Example 10 (IE10): polymerization procedure. For each example, copolymerized ethylene and 1-hexene in a fluidized bed-gas phase polymerization (FB-GPP) reactor having a distribution grid to make an embodiment of the bimodal poly(ethylene-co-1-hexene) copolymer. The FB-GPP reactor had a 0.35 meter (m) internal diameter and 2.3 m bed height and a fluidized bed composed of polymer granules. Flowed fluidization gas through a recycle gas loop comprising sequentially a recycle gas compressor and a shell-and-tube heat exchanger having a water side and a gas side. The fluidization gas flows through the compressor, then the water side of the shell-and-tube heat exchanger, then into the FB-GPP reactor below the distribution grid. Fluidization gas velocity in the be is about 0.61 meter per second (m/s, 2.0 feet per second). The fluidization gas then exits the FB-GPP reactor through a nozzle in the top of the reactor, and is recirculated continuously through the recycle gas loop. Maintained a constant fluidized bed temperature of 105° C. by continuously adjusting the temperature of the water on the shell side of the shell-and-tube heat exchanger. Introduced feed streams of ethylene, nitrogen, and hydrogen together with 1-hexene comonomer into the recycle gas line. Operated the FB-GPP reactor at a total pressure of about 2413 kPA gauge, and vented reactor gases to a flare to control the total pressure. Adjusted individual flow rates of ethylene, nitrogen, hydrogen and 1-hexene to maintain their respective gas composition targets. Set ethylene partial pressure to 1.52 megapascal (MPa, 220 pounds per square inch (psi)), and set the $C_6/C_2$ molar ratio to 0.00125 and the $H_2/C_2$ molar ratio to 0.0009. Maintained isopentane (ICA) concentration at about 8.0 mol%. Measured concentrations of all gasses using an on-line gas chromatograph. Maintained the fluidized bed at constant height by withdrawing a portion of the bed at a rate equal to the rate of formation of particulate product bimodal poly(ethylene-co-1-hexene) copolymer. Recorded average copolymer residence time in hours, typically from 2 to 5 hours. Product was removed semi-continuously via a series of valves into a fixed volume chamber. A nitrogen purge removed a significant portion of entrained and dissolved hydrocarbons in the fixed volume chamber. After purging, the product was discharged from the fixed volume chamber into a fiber pack for collection. The product was further treated with a small stream of humidified nitrogen to deactivate any trace quantities of residual catalyst and cocatalyst.

Inventive Examples 11 to 14 (IE11 to IE14): synthesized bimodal poly(ethylene-co-1-hexene) copolymer. Using the polymerization procedure of IE10, synthesized the bimodal poly(ethylene-co-1-hexene) copolymers of IE11 to IE14.

Inventive Examples 15 to 18 (IE15 to IE18): Formulation and Pelletization Procedure: Each of the different granular resins of the bimodal poly(ethylene-co-1-hexene) copolymer of IE11 to IE14 was separately mixed with 400 parts per million weight/weight (ppm) of Antioxidant 1 and 800 ppm Antioxidant 2 in a ribbon blender, and then compounded into strand cut pellets using a twin-screw extruder Coperion ZSK-40. The resulting pellets of each inventive formulation were tested for various properties according to the aforementioned respective test methods. Results are shown later in Tables 1a and 1b.

Comparative Examples 1 and 2 (CE1 and CE2): replicate the procedure of IE15 twice to make different poly(ethylene-co-1-hexene) copolymers, except use bis(butylcyclopentadienyl)zirconium dimethyl instead of (cyclopentadienyl)(1,5-dimethylindenyl) zirconium dimethyl in the preparation of a comparative bimodal catalyst system. Results are shown below in Tables 1a and 1b.

Table 1a: Properties of formulations of IE15 to IE18 and CE1 and CE2.

| Overall Formulation Property | IE15 | IE16 | IE17 | IE18 | CE1 | CE2 |
|---|---|---|---|---|---|---|
| Copolymer Density (g/cm$^3$) | 0.959 | 0.958 | 0.959 | 0.958 | 0.957 | 0.957 |
| Copolymer $M_w/M_n$ | 17.1 | 17.1 | 16.9 | 17.3 | 14.9 | 19.5 |
| Copolymer $M_z/M_w$ | 12.4 | 12.4 | 11.6 | 11.6 | 11.8 | 10.2 |

(continued)

| Overall Formulation Property | IE15 | IE16 | IE17 | IE18 | CE1 | CE2 |
|---|---|---|---|---|---|---|
| Copolymer $I_2$ (g/10 min.) | 0.2 | 0.2 | 0.2 | 0.1 | 0.2 | 0.1 |
| Copolymer $I_5$ (g/10 min.) | 1.5 | 1.6 | 1.2 | 1.1 | 1.0 | 0.7 |
| Copolymer $I_{21}$ (g/10 min.) | 34 | 37 | 30 | 28 | 28 | 29 |
| Copolymer MFR2 ($I_{21}/I_2$) | 179 | 163 | 192 | 197 | 169 | 244 |
| Copolymer MFR5 ($I_{21}/I_5$) | 23.7 | 22.8 | 25.2 | 26.1 | 27.8 | 39.3 |
| Copolymer ESCR (10% Igepal, F50) (hours) | 175 | 173 | 211 | 236 | 82 | 191 |
| Copolymer ESCR (10% Igepal, F50) > (10 * MFR5 * 1 hour) - 150 hours (Eq. 1) (Yes/no) | Yes | Yes | Yes | Yes | No | No |
| Copolymer $M_w$ (g/mol) | 317,043 | 317,043 | 322,101 | 329,181 | 290,027 | 285,758 |
| Copolymer $M_n$ (g/mol) | 18,579 | 18,579 | 19,045 | 19,046 | 19,416 | 14,670 |
| Copolymer $M_z$ (kg/mol) | 3,919 | 3,919 | 3,731 | 3,813 | 3,422 | 2,927 |
| Copolymer Resin Swell t1000 (seconds) | 8.5 | 8.4 | 8.2 | 8.3 | 9.1 | 7.5 |
| Copolymer Melt Strength (cN) | 8.5 | 7.8 | 8.3 | 8.8 | 10.0 | 9.8 |

Table 1b: Properties of copolymer components of formulations of IE15 to IE18 and CE1 and CE2.

| Component Property | IE15 | IE16 | IE17 | IE18 | CE1 | CE2 |
|---|---|---|---|---|---|---|
| HMW copolymer component amount (wt%) | 22.1 | 21.7 | 23.1 | 23.9 | 20.0 | 24.6 |
| HMW copolymer component $M_w$ (kg/mol) | 1,125 | 1,094 | 1,102 | 1,086 | 1,067 | 904 |
| HMW copolymer component $M_n$ (g/mol) | 269,793 | 266,247 | 266,664 | 259,855 | 305,393 | 265,099 |
| HMW copolymer component $M_z$ (kg/mol) | 2,808 | 2,734 | 2,755 | 2,737 | 2,477 | 2,127 |
| HMW copolymer component $M_w/M_n$ | 4.2 | 4.1 | 4.1 | 4.2 | 3.5 | 3.4 |
| LMW copolymer component amount (wt%) | 77.9 | 78.3 | 76.9 | 76.1 | 80.0 | 75.4 |
| LMW copolymer component $M_w$ (g/mol) | 49,714 | 49,891 | 50,140 | 50,204 | 59,047 | 46,494 |
| LMW copolymer component $M_n$ (g/mol) | 17,942 | 18,167 | 18,078 | 18,217 | 18,540 | 12,755 |
| LMW copolymer component $M_z$ (g/mol) | 104,146 | 103,568 | 105,135 | 104,586 | 142,293 | 128,988 |
| LMW copolymer component $M_w/M_n$ | 2.8 | 2.7 | 2.8 | 2.8 | 3.2 | 3.6 |
| $M_{wH}/M_{wL}$ | 22.6 | 21.9 | 22.0 | 21.6 | 18.1 | 19.4 |

In Tables 1a and 1b, kg/mol means kilograms per mole. 1 kg/mol = 1,000 grams per mole (g/mol).

As shown in Tables 1a and 1b, the bimodal poly(ethylene-*co*-1-alkene) copolymers have improved processability and resistance to cracking in harsh environments relative to the comparative bimodal poly(ethylene-*co*-1-alkene) copolymers. This enables melt-extruding and blow molding of the inventive copolymer into manufactured articles with improved resistance to cracking in harsh environments. The copolymer is also useful for making small-part manufactured articles such as sheets, fibers, coatings and molded articles. Molded articles may be made by processes such as injection molding, rotary molding, or blow molding.

The below claims are hereby incorporated here verbatim by reference.

## Claims

1. A bimodal poly(ethylene-*co*-1-alkene) copolymer comprising a higher molecular weight poly(ethylene-*co*-1-alkene) copolymer component (HMW copolymer component) and a lower molecular weight poly(ethylene-*co*-1-alkene) copolymer component (LMW copolymer component), the copolymer being **characterized by** a combination of

features comprising each of features (a) to (e) and feature (f2) and, optionally feature (g): (a) a density greater than 0.955 gram per cubic centimeter ($g/cm^3$) measured according to ASTM D792-13 (Method B, 2-propanol); (b) a first molecular weight distribution that is a ratio of $M_w/M_n$ from 16 to 18, wherein $M_w$ is weight-average molecular weight and $M_n$ is number-average molecular weight, both measured by Gel Permeation Chromatography (GPC); (c) a second molecular weight distribution that is a ratio of $M_z/M_w$ from 11 to 15, wherein $M_z$ is z-average molecular weight and $M_w$ is weight-average molecular weight, both measured by GPC; (d) a component weight fraction amount wherein the HMW copolymer component is less than 28 weight percent (wt%) of the combined weight of the HMW and LMW copolymer components; and (e) a high load melt index (HLMI or $I_{21}$) from 20 to 45 grams per 10 minutes (g/10 min.) measured according to ASTM D1238-13 (190° C., 21.6 kg); and (f2) an environmental stress-cracking resistance in hours as a function of melt flow ratio, wherein the function is defined by Equation 1: ESCR (10% Igepal, F50) > (10 * MFR5 * 1 hour) - 150 hours (Eq. 1), wherein > means greater than; * means multiplication; ESCR (10% Igepal, F50) is the number of hours to failure measured according to ASTM D1693-15, Method B; and MFR5 is a ratio of the (e) HLMI divided by a melt index $I_5$ expressed in g/10 min. measured according to ASTM D1238-13 (190° C., 5.0 kg); and, optionally (g) a resin swell t1000 of greater than 7.7 seconds, measured according to the Resin Swell t1000 Test Method.

**2.** The bimodal poly(ethylene-*co*-1-alkene) copolymer of claim 1 further **characterized by** any one of refined features (a), (d), (e), (f1) or (f2), respectively, and (g): (a) the density is from 0.956 to 0.962 $g/cm^3$; (d) the HMW copolymer component weight fraction amount is from 17 to 27 wt%; (e) the HLMI is from 25 to 41; (f1) an ESCR (10% Igepal, F50) of from 150 to 500 hours or (f2) the ESCR (10% Igepal, F50) is a function of the MFR5 as defined by Equation 1a: ESCR (10% Igepal, F50) > (10 * MFR5 * 1 hour) - 100 hours (Eq. 1a); and (g) the resin swell t1000 is from 7.7 to 9.0 seconds.

**3.** The bimodal poly(ethylene-*co*-1-alkene) copolymer of claim 1 or 2 further **characterized by** any one of features (h) to (q): (h) $M_w$ from 280,000 to 360,000 grams per mole (g/mol); (i) $M_n$ from 15,000 to 23,000 grams g/mol; (j) $M_z$ from 3,000,000 to 4,800,000 g/mol; (k) an MFR5 from 16 to 27; (l) feature (g) in combination with (f1); (m) a melt index $I_5$ from 0.5 to 2.0 g/10 minutes; (n) feature (g) in combination with feature (f2); (o) feature (g) in combination with feature (f1) and (f2), respectively; (p) a combination of any seven of features (h) to (o); and (q) a combination of each of features (h) to (o).

**4.** The bimodal poly(ethylene-*co*-1-alkene) copolymer of any one of claims 1 to 3 further **characterized by** any one of features (r) to (w): (r) the LMW copolymer component has a $M_w$ from 45,000 to 55,000 g/mol; (s) the LMW copolymer component has a $M_n$ from 13,000 to 20,000 g/mol; (t) the LMW copolymer component has a $M_z$ from 85,000 to 115,000 g/mol; (u) the LMW copolymer component has a $M_w/M_n$ ratio from 2.5 to 3.3; (v) any three of features (r) to (u); (w) each of features (r) to (u).

**5.** The bimodal poly(ethylene-*co*-1-alkene) copolymer of any one of claims 1 to 4 further **characterized by** any one of features (x) to (ac): (x) the HMW copolymer component has a $M_w$ from 1,000,000 to 1,400,000 g/mol; (y) the HMW copolymer component has a $M_n$ from 220,000 to 320,000 g/mol; (z) the HMW copolymer component has a $M_z$ from 2,000,000 to 4,700,000 g/mol; (aa) the HMW copolymer component has a $M_w/M_n$ ratio from 4.0 to 4.4; (ab) any three of features (x) to (aa); and (ac) each of features (x) to (aa).

**6.** The bimodal poly(ethylene-*co*-1-alkene) copolymer of any one of claims 1 to 5 further **characterized by** feature (ad) a melt strength of greater than 7.0 centinewtons (cN).

**7.** The bimodal poly(ethylene-*co*-1-alkene) copolymer of any one of claims 1 to 6 wherein the 1-alkene is 1-hexene and the bimodal poly(ethylene-*co*-1-alkene) copolymer is bimodal poly(ethylene-co-1-hexene) copolymer

**8.** A method of making the bimodal poly(ethylene-*co*-1-alkene) copolymer of any one of claims 1 to 7, the method comprising contacting ethylene and 1-alkene with a bimodal catalyst system in a single polymerization reactor under effective polymerization conditions to give the bimodal poly(ethylene-*co*-1-alkene) copolymer; wherein the bimodal catalyst system consists essentially of a metallocene catalyst, a single-site non-metallocene catalyst that is a bis((alkyl-substituted phenylamido)ethyl)amine catalyst, optionally a host material, and optionally an activator; wherein the host material, when present, is selected from at least one of an inert hydrocarbon liquid and a solid support; wherein the metallocene catalyst is an activation reaction product of contacting an activator with a metal-ligand complex of formula $(R_{1-2}Cp)((alkyl)_{1-3}Indenyl)MX_2$, wherein R is hydrogen, methyl, or ethyl; each alkyl independently is a $(C_1-C_4)$alkyl; M is titanium, zirconium, or hafnium; and each X is independently a halide, a ($C_1$ to $C_{20}$)alkyl, a ($C_7$ to $C_{20}$)aralkyl, a ($C_1$ to $C_6$)alkyl-substituted ($C_6$ to $C_{12}$)aryl, or a ($C_1$ to $C_6$)alkyl-substituted benzyl; and wherein the bis((alkyl-substituted phenylamido)ethyl)amine catalyst is an activation reaction product of contacting an activator with a bis((alkyl-substituted phenylamido)ethyl)amine $ZrR^1_2$, wherein each $R^1$ is independently selected from F, Cl, Br, I, benzyl, $-CH_2Si(CH_3)_3$, a $(C_1-C_5)$alkyl, and a $(C_2-C_5)$alkenyl.

**9.** The method of claim 8 having at least one of the following features: the single polymerization reactor is a single gas phase polymerization reactor; and the metal-ligand complex is of formula (I):

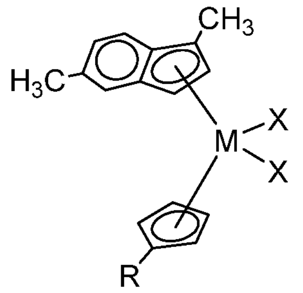

(I)

,

wherein R, M, and X are as defined therein.

**10.** A formulation comprising the bimodal poly(ethylene-*co*-1-alkene) copolymer of any one of claims 1 to 7 and at least one additive that is different than the copolymer.

**11.** A method of making a manufactured article, the method comprising extruding-melt-blowing the bimodal poly(ethylene-*co*-1-alkene) copolymer of any one of claims 1 to 7, or the formulation of claim 10, under effective conditions so as to make the manufactured article.

**12.** The manufactured article made by the method of claim 11.

**13.** Use of the manufactured article of claim 12 in storing or transporting a material in need of storing or transporting.

## Patentansprüche

**1.** Bimodales Poly(ethylen-co-1-alken)-Copolymer, umfassend eine Poly(ethylen-co-1-alken)-Copolymerkomponente mit höherem Molekulargewicht (HMW-Copolymerkomponente) und eine Poly(ethylen-co-1-alken)-Copolymerkomponente mit niedrigerem Molekulargewicht (LMW-Copolymerkomponente), wobei das Copolymer **gekennzeichnet ist durch** eine Kombination von Merkmalen, umfassend jedes der Merkmale (a) bis (e) und Merkmal (f2) und wahlweise Merkmal (g): (a) eine Dichte größer als 0,955 Gramm pro Kubikzentimeter ($g/cm^3$), gemessen gemäß ASTM D792-13 (Verfahren B, 2-Propanol); (b) eine erste Molekulargewichtsverteilung, die ein Verhältnis von $M_w/M_n$ von 16 bis 18 ist, wobei $M_w$ das gewichtsmittlere Molekulargewicht und $M_n$ das zahlenmittlere Molekulargewicht ist, beide gemessen mittels Gelpermeationschromatographie (GPC); (c) eine zweite Molekulargewichtsverteilung, die ein Verhältnis von $M_z/M_w$ von 11 bis 15 ist, wobei $M_z$ das z-mittlere Molekulargewicht und $M_w$ das gewichtsmittlere Molekulargewicht ist, beide gemessen mittels GPC; (d) eine Komponentengewichtsfraktionsmenge, wobei die HMW-Copolymerkomponente weniger als 28 Gewichtsprozent (Gew.-%) des kombinierten Gewichts der HMW- und LMW-Copolymerkomponenten beträgt; und (e) einen Hochlastschmelzindex (HLMI oder $I_{21}$) von 20 bis 45 Gramm pro 10 Minuten (g/10 min), gemessen gemäß ASTM D1238-13 (190 °C, 21,6 kg); und (f2) eine Spannungsrissbeständigkeit in Stunden als Funktion des Schmelzflussverhältnisses, wobei die Funktion durch Gleichung 1 definiert ist: ESCR (10 % Igepal, F50) > (10 * MFR5 * 1 Stunde) - 150 Stunden (Gl. 1), wobei > größer als bedeutet; * Multiplikation bedeutet; ESCR (10 % Igepal, F50) die Anzahl der Stunden bis zum Versagen, gemessen gemäß ASTM D1693-15, Verfahren B ist; und MFR5 ein Verhältnis des (e) HLMI dividiert durch einen Schmelzindex $I_5$, ausgedrückt in g/10 min, gemessen gemäß ASTM D1238-13 (190 ° C, 5,0 kg) ist; und wahlweise (g) eine Harzquellung t1000 von mehr als 7,7 Sekunden, gemessen gemäß dem Harzquellung- t1000-Prüfverfahren.

**2.** Bimodales Poly(ethylen-*co*-1-alken)-Copolymer nach Anspruch 1, ferner **gekennzeichnet durch** eines der verfeinerten Merkmale (a), (d), (e), (f1) bzw. (f2) und (g): (a) die Dichte beträgt 0,956 bis 0,962 $g/cm^3$; (d) die Gewichtsfraktionsmenge der HMW-Copolymerkomponenten beträgt 17 bis 27 Gew.-%; (e) der HLMI beträgt 25 bis 41; (f1) eine ESCR (10 % Igepal, F50) von 150 bis 500 Stunden oder (f2) die ESCR (10 % Igepal, F50) ist eine Funktion des MFR5, definiert durch Gleichung 1a: ESCR (10 % Igepal, F50) > (10 * MFR5 * 1 Stunde) - 100 Stunden

(Gl. 1a); und (g) die Harzquellung t1000 beträgt 7,7 bis 9,0 Sekunden.

**3.** Bimodales Poly(ethylen-*co*-1-alken)-Copolymer nach Anspruch 1 oder 2, ferner **gekennzeichnet durch** eines der Merkmale (h) bis (q): (h) $M_w$ von 280.000 bis 360.000 Gramm pro Mol (g/mol); (i) $M_n$ von 15.000 bis 23.000 g/mol; (j) $M_z$ von 3.000.000 bis 4.800.000 g/mol; (k) ein MFR5 von 16 bis 27; (I) Merkmal (g) in Kombination mit (f1); (m) ein Schmelzindex $I_5$ von 0,5 bis 2,0 g/10 min; (n) Merkmal (g) in Kombination mit Merkmal (f2); (o) Merkmal (g) in Kombination mit Merkmal (f1) bzw. (f2); (p) eine Kombination von beliebigen sieben der Merkmale (h) bis (o); und (q) eine Kombination jedes der Merkmale (h) bis (o).

**4.** Bimodales Poly(ethylen-*co*-1-alken)-Copolymer nach einem der Ansprüche 1 bis 3, ferner **gekennzeichnet durch** eines der Merkmale (r) bis (w): (r) die LMW-Copolymerkomponente weist ein $M_w$ von 45.000 bis 55.000 g/mol auf; (s) die LMW-Copolymerkomponente weist ein $M_n$ von 13.000 bis 20.000 g/mol auf; (t) die LMW-Copolymerkomponente weist ein $M_z$ von 85.000 bis 115.000 g/mol auf; (u) die LMW-Copolymerkomponente weist ein $M_w/M_n$-Verhältnis von 2,5 bis 3,3 auf; (v) beliebige drei der Merkmale (r) bis (u); (w) jedes der Merkmale (r) bis (u).

**5.** Bimodales Poly(ethylen-*co*-1-alken)-Copolymer nach einem der Ansprüche 1 bis 4, ferner **gekennzeichnet durch** eines der Merkmale (x) bis (ac): (x) die HMW-Copolymerkomponente weist ein $M_w$ von 1.000.000 bis 1.400.000 g/mol auf; (y) die HMW-Copolymerkomponente weist ein $M_n$ von 220.000 bis 320.000 g/mol auf; (z) die HMW-Copolymerkomponente weist ein $M_z$ von 2.000.000 bis 4.700.000 g/mol auf; (aa) die HMW-Copolymerkomponente weist ein $M_w/M_n$-Verhältnis von 4,0 bis 4,4 auf; (ab) beliebige drei der Merkmale (x) bis (aa); und (ac) jedes der Merkmale (x) bis (aa).

**6.** Bimodales Poly(ethylen-*co*-1-alken)-Copolymer nach einem der Ansprüche 1 bis 5, ferner **gekennzeichnet durch** Merkmal (ad) eine Schmelzfestigkeit von größer als 7,0 Centinewton (cN).

**7.** Bimodales Poly(ethylen-*co*-1-alken)-Copolymer nach einem der Ansprüche 1 bis 6, wobei das 1-Alken 1-Hexen ist und das bimodale Poly(ethylen-co-1-alken)-Copolymer bimodales Poly(ethylen-co-1-hexen)-Copolymer ist.

**8.** Verfahren zur Herstellung des bimodalen Poly(ethylen-co-1-alken)-Copolymers nach einem der Ansprüche 1 bis 7, das Verfahren umfassend das Inkontaktbringen von Ethylen und 1-Alken mit einem bimodalen Katalysatorsystem in einem einzelnen Polymerisationsreaktor unter wirksamen Polymerisationsbedingungen, um das bimodale Poly(ethylen-co-1-alken)-Copolymer zu ergeben; wobei das bimodale Katalysatorsystem im Wesentlichen aus einem Metallocenkatalysator, einem Einzelzentrum-nicht-Metallocenkatalysator, der ein Bis-((alkylsubstituierter Phenylamido)ethyl)aminKatalysator ist, wahlweise einem Wirtsmaterial und wahlweise einem Aktivator besteht; wobei das Wirtsmaterial, wenn vorhanden, aus mindestens einem von einer inerten Kohlenwasserstoffflüssigkeit und einem festen Träger ausgewählt ist; wobei der Metallocenkatalysator ein Aktivierungsreaktionsprodukt des Inkontaktbringens eines Aktivators mit einem Metall-Ligand-Komplex der Formel $(R_{1-2}Cp)((-Alkyl)_{1-3}$-Indenyl)-$MX_2$ ist, wobei R Wasserstoff, Methyl oder Ethyl ist; jedes Alkyl unabhängig ein ($C_1$-$C_4$)-Alkyl ist; M Titan, Zirkonium oder Hafnium ist; und jedes X unabhängig ein Halogenid, ein ($C_1$ bis $C_{20}$)-Alkyl, ein ($C_7$ bis $C_{20}$)- Aralkyl, ein ($C_1$ bis $C_6$)-alkylsubstituiertes ($C_6$ bis $C_{12}$)-Aryl oder ein ($C_1$ bis $C_6$)- alkylsubstituiertes Benzyl ist; und wobei der Bis-((alkylsubstituierte Phenylamido)ethyl)amin-Katalysator ein Aktivierungsreaktionsprodukt des Inkontaktbringens eines Aktivators mit einem Bis((alkylsubstituiertes Phenylamido)ethyl)amin $ZrR^1_2$ ist, wobei jedes $R^1$ unabhängig ausgewählt ist aus F, Cl, Br, I, Benzyl, $-CH_2Si(CH_3)_3$, einem ($C_1$-$C_5$)-Alkyl und einem ($C_2$-$C_5$)-Alkenyl.

**9.** Verfahren nach Anspruch 8, das mindestens eines der folgenden Merkmale aufweist: der einzelne Polymerisationsreaktor ist ein einzelner Gasphasenpolymerisationsreaktor; und der Metall-Ligand-Komplex weist die Formel (I) auf:

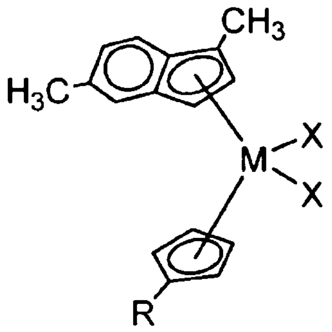

(I)

,

wobei R, M und X wie darin definiert sind.

10. Formulierung, umfassend das bimodale Poly(ethylen-co-1-alken)-Copolymer nach einem der Ansprüche 1 bis 7 und mindestens einen Zusatzstoff, der sich von dem Copolymer unterscheidet.

11. Verfahren zur Herstellung eines gefertigten Erzeugnisses, das Verfahren umfassend das Extrudieren einer Schmelze des bimodalen Poly(ethylen-co-1-alken)-Copolymers nach einem der Ansprüche 1 bis 7 oder der Formulierung nach Anspruch 10 unter wirksamen Bedingungen, um das gefertigte Erzeugnis herzustellen.

12. Gefertigtes Erzeugnis, hergestellt durch das Verfahren nach Anspruch 11.

13. Verwendung des gefertigten Erzeugnisses nach Anspruch 12 beim Lagern oder Transportieren eines Materials, das gelagert oder transportiert werden muss.

## Revendications

1. Copolymère bimodal de poly(éthylène-co-1-alcène) comprenant un composant copolymère poly(éthylène-co-1-alcène) de masse moléculaire supérieure (composant de copolymère HMW) et un composant copolymère poly(éthylène-co-1-alcène) de masse moléculaire inférieure (composant copolymère LMW), le copolymère étant **caractérisé par** une combinaison de caractéristiques comprenant chacune des caractéristiques (a) à (e) et de la caractéristique (f2) et, éventuellement, de la caractéristique (g) : (a) une masse volumique supérieure à 0,955 gramme par centimètre cube (g/cm$^3$), mesurée selon la norme ASTM D792-13 (procédé B, 2-propanol) ; (b) une première distribution de masses moléculaires qui est un rapport de $M_w/M_n$ de 16 à 18, dans lequel $M_w$ est la masse moléculaire moyenne en poids et $M_n$ est la masse moléculaire moyenne en nombre, toutes deux mesurées par chromatographie par perméation de gel (GPC) ; (c) une seconde distribution des masses moléculaires qui est un rapport de $M_z/M_w$ de 11 à 15, dans lequel $M_z$ représente la masse moléculaire moyenne en z et $M_w$ la masse moléculaire moyenne en poids, toutes deux mesurées par GPC ; (d) une fraction pondérale de composant, dans lequel le composant copolymère HMW représente moins de 28 pour cent en poids (% en poids) du poids combiné des composants copolymères HMW et LMW ; et (e) un indice de fluidité sous charge élevée (HLMI ou $I_{21}$) allant de 20 à 45 grammes pour 10 minutes (g/10 min), mesuré selon la norme ASTM D1238-13 (190 °C, 21,6 kg) ; et (f2) une résistance à la fissuration sous contrainte dans l'environnement en heures en fonction du rapport d'écoulement à l'état fondu, dans lequel la fonction est définie par l'équation 1 : ESCR (10 % Igepal, F50) > (10 * MFR5 * 1 heure) - 150 heures (Eq. 1), dans lequel > signifie supérieur à ; * signifie multiplication ; ESCR (10 % Igepal, F50) est le nombre d'heures jusqu'à la défaillance mesuré selon la norme ASTM D1693-15, procédé B ; et MFR5 est un rapport du (e) HLMI divisé par un indice de fusion $I_5$ exprimé en g/10 min. mesuré selon la norme ASTM D1238-13 (190 °C, 5,0 kg) ; et, éventuellement, (g) un gonflement de résine t1000 de plus de 7,7 secondes, mesuré selon le procédé d'essai de gonflement de résine t1000.

2. Copolymère bimodal de poly(éthylène-*co*-1-alcène) selon la revendication 1, en outre **caractérisé par** l'une quelconque des caractéristiques raffinées (a), (d), (e), (f1) ou (f2), respectivement, et (g) : (a) la masse volumique va de 0,956 à 0,962 g/cm$^3$ ; (d) la quantité de fraction pondérale du composant copolymère HMW va de 17 à 27 % en poids ; (e) le HLMI va de 25 à 41 ; (f1) un ESCR (10 % Igepal, F50) allant de 150 à 500 heures ou (f2) l'ESCR (10 % Igepal, F50) est une fonction du MFR5 tel que défini par l'équation 1a : ESCR (10 % Igepal, F50) > (10 * MFR5 * 1 heure) - 100 heures (Eq. 1a) ; et (g) le gonflement de résine T1000 est compris entre 7,7 et 9,0 secondes.

**3.** Copolymère bimodal de poly(éthylène-*co*-1-alcène) selon la revendication 1 ou 2, **caractérisé par** l'une quelconque des
caractéristiques (h) à (q) : (h) $M_w$ de 280 000 à 360 000 grammes par mole (g/mol) ; (i) $M_n$ de 15 000 à 23 000 grammes g/mol ; (j) $M_z$ allant de 3 000 000 à 4 800 000 g/mol ; (k) un MFR5 de 16 à 27 ;(I) la caractéristique (g) en combinaison avec (f1) ; (m) un indice de fusion $I_5$ allant de 0,5 à 2,0 g/10 minutes ; (n) la caractéristique (g) en combinaison avec la caractéristique (f2) ; (o) la caractéristique (g) en combinaison avec les caractéristiques (f1) et (f2), respectivement ; (p) une combinaison de l'une quelconque des sept caractéristiques (h) à (o) ; et (q) une combinaison de chacune des caractéristiques (h) à (o).

**4.** Copolymère bimodal de poly(éthylène-*co*-1-alcène) selon l'une quelconque des revendications 1 à 3 en outre **caractérisé par** l'une quelconque des caractéristiques (r) à (w) : (r) le composant copolymère LMW a une $M_w$ allant de 45 000 à 55 000 g/mol ; (s) le composant copolymère LMW a un $M_n$ allant de 13 000 à 20 000 g/mol ; (t) le composant copolymère LMW a un $M_z$ allant de 85 000 à 115 000 g/mol ; (u) le composant copolymère LMW a un rapport $M_w/M_n$ de 2,5 à 3,3 ; (v) trois quelconques des caractéristiques (r) à (u) ; (w) chacune des caractéristiques (r) à (u).

**5.** Copolymère bimodal de poly(éthylène-*co*-1-alcène) selon l'une quelconque des revendications 1 à 4 en outre **caractérisé par** l'une quelconque des caractéristiques (x) à (ac) : (x) le composant copolymère HMW a une $M_w$ allant de 1 000 000 à 1 400 000 g/mol ; (y) le composant copolymère HMW a un $M_n$ allant de 220 000 à 320 000 g/mol ; (z) le composant copolymère HMW a un $M_z$ de 2 000 000 à 4 700 000 g/mol ; (aa) le composant copolymère HMW a un rapport $M_w/M_n$ de 4,0 à 4,4 ; (ab) l'une quelconque des trois caractéristiques (x) à (aa) ; et (ac) chacune des caractéristiques (x) à (aa).

**6.** Copolymère bimodal de poly(éthylène-*co*-1-alcène) selon l'une quelconque des revendications 1 à 5 en outre **caractérisé par** la caractéristique (ad) d'une résistance à l'état fondu supérieure à 7,0 centinewtons (cN).

**7.** Copolymère bimodal de poly(éthylène-*co*-1-alcène) selon l'une quelconque des revendications 1 à 6, dans lequel le 1-alcène est le 1-hexène et le copolymère bimodal de poly(éthylène-*co*-1-alcène) est un copolymère bimodal de poly(éthylène-*co*-1-alcène).

**8.** Procédé de fabrication le copolymère bimodal de poly(éthylène-*co*-1-alcène) selon l'une quelconque des revendications 1 à 7, le procédé comprenant la mise en contact d'éthylène et de 1-alcène avec un système catalytique bimodal dans un réacteur de polymérisation unique dans des conditions de polymérisation efficace pour donner le copolymère bimodal de poly(éthylène-*co*-1-alcène) ; dans lequel le système catalytique bimodal est constitué essentiellement d'un catalyseur métallocène, d'un catalyseur non métallocène à site unique qui est un catalyseur bis((phénylamido)éthyl)amine substituée par alkyle, éventuellement un matériau hôte, et éventuellement un activateur ; dans lequel le matériau hôte, lorsqu'il est présent, est choisi parmi au moins un support liquide hydrocarboné inerte et un support solide ; dans lequel le catalyseur métallocène est un produit de réaction d'activation de la mise en contact d'un activateur avec un complexe métal-ligand de formule $(R_{1-2}Cp)((alkyl)_{1-3}Indényl)MX_2$, dans lequel R est hydrogène, méthyle, ou éthyle ; chaque alkyle est indépendamment un alkyle en ($C_1$ à $C_4$) ; M est titane, zirconium ou hafnium ; et chaque X est indépendamment un halogénure, un alkyle en ($C_1$ à $C_{20}$), un aralkyle en ($C_7$ à $C_{20}$), un aryle en ($C_6$ à $C_{12}$) subsitué par un alkyle en ($C_1$ à $C_6$), ou un benzyle substitué par un alkyle en ($C_1$ à $C_6$) ; et dans lequel le catalyseur bis((phénylamido)éthyl)amine substituée par alkyle est un produit de réaction d'activation de la mise en contact d'un activateur avec une bis((phénylamido)éthyl)amine substitutée par alkyle $ZrR^1_2$, dans lequel chaque $R^1$ est choisi indépendamment parmi F, Cl, Br, I, benzyle, $-CH_2Si(CH_3)_3$, un alkyle en ($C_1$ à $C_5$), et un alcényle en ($C_2$ à $C_5$).

**9.** Procédé selon la revendication 8 ayant au moins l'une des caractéristiques suivantes : le réacteur de polymérisation unique est un réacteur de polymérisation à phase gazeuse unique ; et le complexe métal-ligand
est de formule (I) :

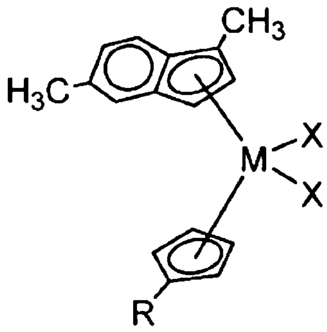

(I)

,

dans lequel R, M et X sont tels qu'ils y sont définis.

**10.** Formulation comprenant le copolymère bimodal de poly(éthylène-co-1-alcène) selon l'une quelconque des revendications 1 à 7 et au moins un additif qui est différent du copolymère.

**11.** Procédé de fabrication d'un article manufacturé, le procédé comprenant le fait d'extruder-souffler par fusion le copolymère bimodal de poly(éthylène-co-1-alcène) de l'une quelconque des revendications 1 à 7, ou la formulation de la revendication 10, dans des conditions efficaces pour fabriquer l'article manufacturé.

**12.** Article fabriqué par le procédé selon la revendication 11.

**13.** Utilisation de l'article fabriqué selon la revendication 12 pour le stockage ou le transport d'un matériau ayant besoin d'être stocké ou transporté.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 7868092 B2
- US 9169337 B2
- WO 2008147968 A
- US 62712527
- WO 2018147968 A
- WO 2017044373 A
- US 4453399 A
- US 4588790 A
- US 4994534 A
- US 5352749 A
- US 5462999 A
- US 6489408 B
- US 3709853 A
- US 4003712 A
- US 4011382 A
- US 4302566 A
- US 4543399 A
- US 4882400 A
- US 5541270 A
- EP 0802202 A
- BE 839380
- US 5627242 A
- US 5665818 A
- US 5677375 A
- EP 0794200 A
- EP 0649992 B1
- EP 634421 B
- US 4988783 A


### Non-patent literature cited in the description


- Compendium of Chemical Terminology. Gold Book. 24 February 2014
- Standard Test Methods for Density and Specific Gravity (Relative Density) of Plastics by Displacement,. *ASTM D792-13*
- Standard Test Method for Environmental Stress-Cracking of Ethylene Plastics. *ASTM D1693-15*
- **WILLIAMS** ; **WARD**. *J. Polym. Sci., Polym. Let.*, 1968, vol. 6, 621